# EUROPEAN PATENT APPLICATION

(11) **EP 4 297 306 A1**
(43) Date of publication of application: **27.12.2023**
(21) Application number: 21930701.4
(22) Date of filing: 15.03.2021
(51) Int. Cl.: H04L 1/00

(54) **TRANSMISSION INDICATION METHOD AND DEVICE, AND SYSTEM**

(71) Applicant: Huawei Technologies Co., Ltd., Shenzhen, Guangdong 518129 (CN)
(72) Inventor: KONG, Lingxiao, Shenzhen, Guangdong 518129 (CN); PAN, Zhong, Shenzhen, Guangdong 518129 (CN); ZHONG, Wei, Shenzhen, Guangdong 518129 (CN); HUANG, Lei, Shenzhen, Guangdong 518129 (CN); LIU, Jiling, Shenzhen, Guangdong 518129 (CN)
(74) Representative: Huawei European IPR
(86) International application number: PCT/CN2021/080894
(87) International publication number: WO 2022/193105

(57) **Abstract**

This application discloses a transmission indication method, apparatus, and system. The method may be performed by a first communication apparatus, or may be performed by a component of a first communication apparatus. In the method, the first communication apparatus receives N data packets; generates first indication information including a first information bit and a second information bit, where the first information bit carries first information indicating a first data packet, the second information bit carries second information indicating a second data packet, the first indication information further carries third information, and the first indication information indicates a receiving status of at least one of the N data packets based on a sequence in which the first data packet and the second data packet reach the first communication apparatus and a value of the third information; and sends the first indication information. According to the method, the first communication apparatus can efficiently feed back receiving statuses of the N data packets to a second communication apparatus, so that system stability can be improved.

## Description

### TECHNICAL FIELD

This application relates to the field of communication technologies, and in particular, to a transmission indication method, apparatus, and system.

### BACKGROUND

Based on the development of intelligent transportation system and sensor network technologies, a vehicle-mounted communication system is a communication system that applies communication technologies to vehicles to implement highly information-based and intelligent transportation. The vehicle-mounted communication system has high requirements on system stability. A retransmission technology is a technology that can improve system stability of a vehicle-mounted communication system. In the retransmission technology, a receiving node sends information about an incorrectly received data packet to a sending node, and the sending node may resend the incorrectly received data packet to the receiving node based on the information about the incorrectly received data packet, so that the receiving node correctly receives the data packet, thereby reducing a bit error rate and improving the system stability.

In an in-vehicle communication scenario, a rate at which a sending node sends a data packet is far greater than a rate at which a receiving node feeds back a receiving status of the data packet. Therefore, the receiving node is required to feed back receiving statuses of as many data packets as possible to the sending node. Therefore, how the receiving node efficiently indicates the receiving status of the data packet to the sending node to improve system stability is a problem that needs to be urgently resolved.

### SUMMARY

This application provides a transmission indication method, apparatus, and system, to efficiently feed back receiving statuses of a plurality of data packets, and improve system stability.

According to a first aspect, an embodiment of this application provides a transmission indication method. The method may be performed by a first communication apparatus, or may be performed by a component (such as a chip or a chip system) of a first communication apparatus. In the method, the first communication apparatus may receive N data packets, where N is a positive integer greater than or equal to 1; generate first indication information, where the first indication information includes a first information bit and a second information bit, the first information bit carries first information, the second information bit carries second information, the first information indicates a first data packet in the N data packets, the second information indicates a second data packet in the N data packets, the first indication information further carries third information, the first indication information indicates a receiving status of at least one of the N data packets based on a sequence in which the first data packet and the second data packet reach the first communication apparatus and a value of the third information, and the receiving status includes incorrect receiving and correct receiving; and send the first indication information.

In the foregoing embodiment, the first indication information indicates at least one data packet in the N data packets. For example, the first indication information indicates only an incorrectly received data packet in the N data packets, and the second communication apparatus may determine, based on a pre-agreement or a protocol, that other data packets are correctly received data packets. For another example, the first indication information may indicate a receiving status of each of the N data packets. In other words, the second communication apparatus may determine receiving statuses of the N data packets based on the first indication information. Further, the first indication information carries first information, second information, and third information. The first indication information indicates the receiving status of the at least one of the N data packets based on a sequence in which a first data packet indicated by the first information and a second data packet indicated by the second information reach the first communication apparatus and the value of the third information. That is, the first communication apparatus j ointly indicates the receiving status of the at least one of the N data packets through three parts of content. The three parts of content may have a plurality of combinations and can indicate a combination of a plurality of receiving statuses, which has strong adaptability and high flexibility, and a receiving status of a data packet can be efficiently fed back to the second communication apparatus.

In a possible design, that the first indication information indicates a receiving status of at least one of the N data packets through the sequence in which the first data packet and the second data packet reach the first communication apparatus and the value of the third information may be:
indicating receiving statuses of the first data packet and the second data packet based on a sequence in which a first data packet indicated by the first information bit and a second data packet indicated by the second information bit reach the first communication apparatus; and
indicating, based on the receiving statuses of the first data packet and the second data packet and the value of the third information, a receiving status of at least one another data packet of the N data packets, or a receiving status of another data packet that is reached between the first data packet and the second data packet in the N data packets.

In a possible design, that the first indication information indicates a receiving status of at least one of the N data packets based on a sequence in which the first data packet and the second data packet reach the first communication apparatus and a value of the third information may be:

When the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets based on the sequence in which the first data packet and the second data packet reach the first communication apparatus and the value of the third information.

In the foregoing design, the first information and the second information may indicate a same data packet or different data packets, and a combination of a plurality of different receiving statuses may be indicated with reference to the value of the third information.

In a possible design, that the first indication information indicates a receiving status of at least one of the N data packets based on a sequence in which the first data packet and the second data packet reach the first communication apparatus and a value of the third information may be:

When the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, where
the third data packet is a last data packet in the N data packets that reaches the first communication apparatus.

In a possible design, the first indication information further indicates that a data packet other than the incorrectly received data packets in the N data packets is a correctly received data packet.

In a possible design, that the first indication information indicates receiving statuses of at least two of the N data packets based on the sequence in which the first data packet and the second data packet reach the first communication apparatus and the value of the third information may be:

When the first data packet reaches the first communication apparatus after the second data packet and the value of the third information is the first value, the first indication information indicates that a plurality of data packets from the second data packet to the first data packet are incorrectly received data packets, and a data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrectly received data packets, and a data packet between the first data packet and the third data packet is a correctly received data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, where
the third data packet is the last data packet in the N data packets that reaches the first communication apparatus.

In a possible design, that the first indication information indicates a receiving status of at least one of the N data packets through a value of the third information may be:

When the value of the third information is the first value, the first indication information indicates that all the N data packets are correctly received data packets; or
when the value of the third information is the second value, the first indication information indicates that the first data packet is an incorrectly received data packet.

In a possible design, when the value of the third information is the second value, the first indication information further indicates that a data packet other than the first data packet in the N data packets is a correctly received data packet.

In a possible design, the first indication information further carries fourth information, the fourth information indicates the third data packet, and the third data packet is the last data packet in the N data packets that reaches the first communication apparatus.

According to a second aspect, an embodiment of this application provides a transmission indication method. The method may be performed by a second communication apparatus, or may be performed by a component (for example, a chip or a chip system) of a second communication apparatus. In the method, the second communication apparatus sends N data packets to a first communication apparatus, where N is a positive integer greater than or equal to 1; receives first indication information from the first communication apparatus; obtains first information from a first information bit of the first indication information, obtains second information from a second information bit of the first indication information, and obtains third information from a third information bit of the first indication information, where the first information indicates a first data packet in the N data packets, the second information indicates a second data packet in the N data packets, the first indication information indicates a receiving status of at least one of the N data packets in the first communication apparatus through a sending sequence of the first data packet and the second data packet and a value of the third information, and the receiving status includes incorrect receiving and correct receiving; and determines receiving statuses of the N data packets based on the first indication information.

In a possible design, that the first indication information indicates a receiving status of at least one of the N data packets in the first communication apparatus through a sending sequence of the first data packet and the second data packet and a value of the third information may be:
indicating receiving statuses of the first data packet and the second data packet based on a sequence of sending a first data packet indicated by the first information bit and a second data packet indicated by the second information bit; and
indicating, based on the receiving statuses of the first data packet and the second data packet and the value of the third information, a receiving status of at least one another data packet of the N data packets, or a receiving status of another data packet that is reached between the first data packet and the second data packet in the N data packets.

In a possible design, that the first indication information indicates a receiving status of at least one of the N data packets in the first communication apparatus through a sending sequence of the first data packet and the second data packet and a value of the third information may be:

When the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets in the first communication apparatus based on the sequence of sending the first data packet and the second data packet and the value of the third information.

In a possible design, that the first indication information indicates a receiving status of at least one of the N data packets in the first communication apparatus through a sending sequence of the first data packet and the second data packet and a value of the third information may be:

When the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, where
the third data packet is a last data packet in the N data packets that reaches the first communication apparatus.

In a possible design, the first indication information further indicates that a data packet other than the incorrectly received data packets in the N data packets is a correctly received data packet.

In a possible design, that the first indication information indicates a receiving status of at least one of the N data packets in the first communication apparatus through a sending sequence of the first data packet and the second data packet and a value of the third information may be:

When the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrectly received data packets, and a data packet between the first data packet and the third data packet is a correctly received data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, where
the third data packet is the last data packet in the N data packets that reaches the first communication apparatus.

In a possible design, that the first indication information indicates a receiving status of at least one of the N data packets through a value of the third information may be:

When the value of the third information is the first value, the first indication information indicates that all the N data packets are correctly received data packets; or
when the value of the third information is the second value, the first indication information indicates that the first data packet is an incorrectly received data packet.

In a possible design, when the value of the third information is the second value, the first indication information further indicates that a data packet other than the first data packet in the N data packets is a correctly received data packet.

In a possible design, the first indication information further carries fourth information, the fourth information indicates a third data packet, and the third data packet is the last data packet in the N data packets that reaches the first communication apparatus.

In a possible design, the method may further include:
when all the N data packets are correctly received data packets, releasing cached resources occupied by the N data packets; or
when all the N data packets are incorrectly received data packets, sending the N data packets to the first communication apparatus; or
when the N data packets include an incorrectly received data packet and a correctly received data packet, sending the incorrectly received data packet to the first communication apparatus, and releasing a cached resource occupied by the correctly received data packet.

In the foregoing design, the second communication apparatus releases the cached resource occupied by the correctly received data packet, so that utilization of the cached resource can be improved. The second communication apparatus sends the incorrectly received data packet to the first communication apparatus, so that a bit error rate can be reduced, and system stability can be improved.

According to a third aspect, an embodiment of this application provides a transmission indication apparatus. The apparatus may include a processing module and a communication module. The modules may perform corresponding functions performed by the first communication apparatus in any design example of the first aspect.

For example, the communication module is configured to receive N data packets, where N is a positive integer greater than or equal to 1.

The processing module is configured to generate first indication information, where the first indication information includes a first information bit and a second information bit. The first information bit carries first information, and the second information bit carries second information. The first information indicates a first data packet in the N data packets, and the second information indicates a second data packet in the N data packets. The first indication information further carries third information. The first indication information indicates a receiving status of at least one of the N data packets based on a sequence in which the first data packet and the second data packet reach the first communication apparatus and a value of the third information, and the receiving status includes incorrect receiving and correct receiving.

The communication module is further configured to send the first indication information.

According to a fourth aspect, an embodiment of this application provides a transmission indication apparatus. The apparatus may include a processing module and a communication module. The modules may perform corresponding functions performed by the second communication apparatus in any design example of the second aspect.

For example, the communication module is configured to send N data packets to a first communication apparatus, where N is a positive integer greater than or equal to 1; and receive first indication information from the first communication apparatus.

The processing module is configured to obtain first information from a first information bit of the first indication information, obtain second information from a second information bit of the first indication information, and obtain third information from a third information bit of the first indication information, where the first information indicates a first data packet in the N data packets, the second information indicates a second data packet in the N data packets, the first indication information indicates a receiving status of at least one of the N data packets in the first communication apparatus through a sending sequence of the first data packet and the second data packet and a value of the third information, and the receiving status includes incorrect receiving and correct receiving; and determine receiving statuses of the N data packets on the first indication information.

According to a fifth aspect, this application provides a communication apparatus. The communication apparatus may be a first communication apparatus, or may be an apparatus in a first communication apparatus. The communication apparatus may include a processor, configured to implement the method performed by the first communication apparatus in the first aspect. The communication apparatus may further include a memory, configured to store program instructions and data. The memory is coupled to the processor, and the processor may invoke and execute the program instructions stored in the memory, to implement any method performed by the first communication apparatus in the first aspect.

Optionally, the communication apparatus may further include a transceiver, and the transceiver is configured for the communication apparatus to communicate with another device.

According to a sixth aspect, this application provides a communication apparatus. The communication apparatus may be a second communication apparatus, or may be an apparatus in a second communication apparatus. The communication apparatus may include a processor, configured to implement the method performed by the second communication apparatus in the second aspect. The communication apparatus may further include a memory, configured to store program instructions and data. The memory is coupled to the processor, and the processor may invoke and execute the program instructions stored in the memory, to implement any method performed by the second communication apparatus in the second aspect.

Optionally, the communication apparatus may further include a transceiver, and the transceiver is configured for the communication apparatus to communicate with another device.

According to a seventh aspect, this application provides a computer-readable storage medium. The storage medium stores a computer program or instructions, and when the computer program or the instructions are executed, the method performed by the first communication apparatus in any design example of the first aspect may be implemented.

According to an eighth aspect, this application provides a computer-readable storage medium. The storage medium stores a computer program or instructions, and when the computer program or the instructions are executed, the method performed by the second communication apparatus in any design example of the second aspect may be implemented.

According to a ninth aspect, this application provides a computer program product, including instructions. When the instructions are run on a computer, the computer is enabled to perform the method performed by the first communication apparatus in any design example of the first aspect.

According to a tenth aspect, this application provides a computer program product, including instructions. When the instructions are run on a computer, the computer is enabled to perform the method performed by the second communication apparatus in any design example of the second aspect.

According to an eleventh aspect, this application further provides a chip system. The chip system includes a processor, may further include a memory, and is configured to implement the method performed by the first communication apparatus in any design example of the first aspect. The chip system may include a chip, or may include a chip and another discrete component.

According to a twelfth aspect, this application further provides a chip system. The chip system includes a processor, may further include a memory, and is configured to implement the method performed by the second communication apparatus in any design example of the second aspect. The chip system may include a chip, or may include a chip and another discrete component.

According to a thirteenth aspect, this application further provides a communication system. The communication system includes the communication apparatus in any design example of the fifth aspect and the communication apparatus in any design example of the sixth aspect.

For beneficial effects of the second aspect to the thirteenth aspect and the implementations of the second aspect to the thirteenth aspect, refer to descriptions of beneficial effects of the first aspect and the implementations of the first aspect.

### BRIEF DESCRIPTION OF DRAWINGS

FIG. 1A is a schematic diagram of an application scenario according to an embodiment of this application;
FIG. 1B is a schematic diagram of another application scenario according to an embodiment of this application;
FIG. 1C is a schematic diagram of still another application scenario according to an embodiment of this application;
FIG. 2 is a schematic diagram of a structure of a retransmission indication frame according to an embodiment of this application;
FIG. 3 is a schematic flowchart of a transmission indication method according to an embodiment of this application;
FIG. 4 is a schematic diagram of a structure of first indication information according to an embodiment of this application;
FIG. 5 is a schematic diagram of another structure of first indication information according to an embodiment of this application;
FIG. 6 is a schematic diagram of still another structure of first indication information according to an embodiment of this application;
FIG. 7 is a schematic diagram of a structure of a transmission indication apparatus according to an embodiment of this application; and
FIG. 8 is a schematic diagram of a structure of a communication apparatus according to an embodiment of this application.

### DESCRIPTION OF EMBODIMENTS

The following first describes some terms in embodiments of this application, to facilitate understanding by a person skilled in the art.
(1) A receiving status of a data packet includes incorrect receiving and correct receiving. For example, if a receiving node fails to decode a data packet from a sending node, or a receiving node fails to receive a data packet from a sending node, the receiving status of the data packet is incorrect receiving. On the contrary, if the receiving node successfully decodes the data packet from the sending node, the receiving status of the data packet is correct receiving.
(2) An identifier of a data packet may also be referred to as a sequence number, a number, or the like of the data packet. The identifier of the data packet may be used to uniquely identify *N*ₘₐₓ data packets, or may be used to uniquely identify M data packets. *N*ₘₐₓ is a maximum quantity of data packets included in a process that the receiving node feeds back the receiving status of the data packet to the sending node once, and M is a quantity of data packets received by the receiving node from the sending node. *N*ₘₐₓ is a positive integer greater than or equal to 1, and M is a positive integer greater than or equal to 1. A value relationship between *N*ₘₐₓ and M is not limited in this embodiment of this application. However, for ease of understanding of this embodiment of this application, an example in which *N*ₘₐₓ is less than or equal to M is used below for description.

If a rate at which the sending node sends a data packet is greater than a rate at which the receiving node feeds back a receiving status of the data packet, the following case may exist: The receiving node receives M data packets from the sending node, but the receiving node feeds back only some or all of the M data packets when feeding back the receiving status of the data packet to the sending node once. For ease of understanding this embodiment of this application, the following uses an example in which a quantity of data packets included in a process that the receiving node feeds back the receiving status of a data packet to the sending node once is N for description. N is a positive integer greater than or equal to 1, less than or equal to M, and less than or equal to *N*ₘₐₓ.

When receiving the data packets from the sending node, the receiving node may count the M data packets based on timestamps corresponding to arrival of the data packets at the receiving node, to obtain identifiers of the M data packets, for example, denoted as 0 to M-1; and count the *N*ₘₐₓ data packets in the M data packets to obtain identifiers of the *N*ₘₐₓ data packets, for example, denoted as 0 to *N*ₘₐₓ-1. For example, M is equal to 4, and identifiers of the M data packets are 0, 1, 2, and 3 respectively; and *N*ₘₐₓ is equal to 2, an identifier of a data packet whose identifier is 0 in the *N*ₘₐₓ data packets is 0, an identifier of a data packet whose identifier is 1 in the *N*ₘₐₓ data packets is 1, an identifier of a data packet whose identifier is 2 in the *N*ₘₐₓ data packets is 0, and an identifier of a data packet whose identifier is 3 in the *N*ₘₐₓ data packets is 1. A smaller identifier of the data packet in the M data packets indicates that the data packet reaches the receiving node earlier in the M data packets. Similarly, a smaller identifier of the data packet in the *N*ₘₐₓ data packets indicates that the data packet reaches the receiving node earlier in the *N*ₘₐₓ data packets.

It may be understood that, when an (N+1)^{th} data packet in the M data packets reaches, the receiving node starts a new round of counting. For example, M is equal to 6, *N*ₘₐₓ is equal to 4, and N is equal to 2, the identifiers of the M data packets are denoted as 0 to 5, and the identifiers of the *N*ₘₐₓ data packets are denoted as 0 to 3. That is, the receiving node receives the M data packets, and feeds back receiving statuses of a first data packet and a second data packet in the M data packets to the sending node. An identifier of a third data packet in the M data packets is 2 in the M data packets, and an identifier of the third data packet in the M data packets is 0 in the *N*ₘₐₓ data packets.

It may be understood that the identifiers of the *N*ₘₐₓ data packets may be 0 to *N*ₘₐₓ - 1, or may be 1 to *N*ₘₐₓ, or may be represented in another manner. This is not limited in this embodiment of this application. Similarly, the identifiers of the M data packets may be 0 to M-1, or may be 1 to M, or may be represented in another manner. This is not limited in this embodiment of this application.

(3) An error set may refer to a set of one or a plurality of consecutive incorrectly received data packets. For example, when a length of the error set is equal to 1, the error set includes only one incorrectly received data packet. For example, when a length of the error set is greater than 1, the error set includes two or more consecutive incorrectly received data packets. The plurality of consecutive data packets means that the plurality of data packets reach the receiving node in sequence. For example, identifiers (or sequence numbers, or numbers) of the plurality of consecutive data packets are consecutive.

(4) The network device may also be referred to as a radio access network device, and may be a base station (base station), an eNodeB, a transmission reception point (transmission reception point, TRP), a gNB, a next-generation base station in a 6th generation (6th generation, 6G) mobile communication system, a base station in a future mobile communication system, an access node in a Wi-Fi system, or the like; or may be a module or a unit that completes some functions of a base station, for example, may be a central unit (central unit, CU), or may be a distributed unit (distributed unit, DU). The radio access network device may be a macro base station, or may be a micro base station, an indoor base station, or the like. A specific technology and a specific device form used by the network device are not limited in embodiments of this application.

(5) The terminal device may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), Internet of Things (Internet of Things, IoT), virtual reality, augmented reality, industrial control, self-driving, telemedicine, smart grid, smart furniture, smart office, smart wearable, smart transportation, and smart city. The terminal may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form used by the terminal are not limited in embodiments of this application.

(6) Terms "system" and "network" may be used interchangeably in embodiments of this application. "At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be singular form or plural. A character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent a, b, c, a and b, a and c, b and c, or a, b, and c, where a, b, and c each may be singular or plural.

Unless otherwise specified, ordinal numbers such as "first", "second", and "third" mentioned in embodiments of this application are used to distinguish a plurality of objects, and are not used to limit sizes, content, a sequence, a time sequence, a priority, an importance degree, or the like of the plurality of obj ects. For example, first information, second information, and third information are merely used to distinguish between different information, but do not indicate different sizes, content, sending sequences, priorities, importance degrees, or the like of the three pieces of information. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

The following describes, with reference to the accompanying drawings, communication scenarios to which embodiments of this application are applied.

Communication scenarios to which the technical solutions provided in embodiments of this application are applied may include wide area communication, for example, communication between a network device and a terminal device. The network device may be used as the sending node, and the terminal device may be used as the receiving node. For example, the network device sends a data packet to the terminal device, and the terminal device feeds back a receiving status of the data packet to the network device, so that the network device retransmits an incorrectly received data packet and releases a resource (for example, a cached resource) occupied by a correctly received data packet. Alternatively, an in-vehicle communication scenario may be included, for example, including communication between a cockpit domain controller or control domain cockpit (cockpit domain controller or control domain cockpit, CDC) and an in-vehicle speaker or an in-vehicle microphone, communication between mobile phones, communication between a mobile phone and a wearable device such as a headset, or communication between a mobile data center (mobile data center, MDC) of an intelligent driving platform and a camera or a radar (such as a lidar and/or an ultrasonic radar). Alternatively, local area wireless communication may be included, for example, communication between an access point (access point, AP) and a station (station).

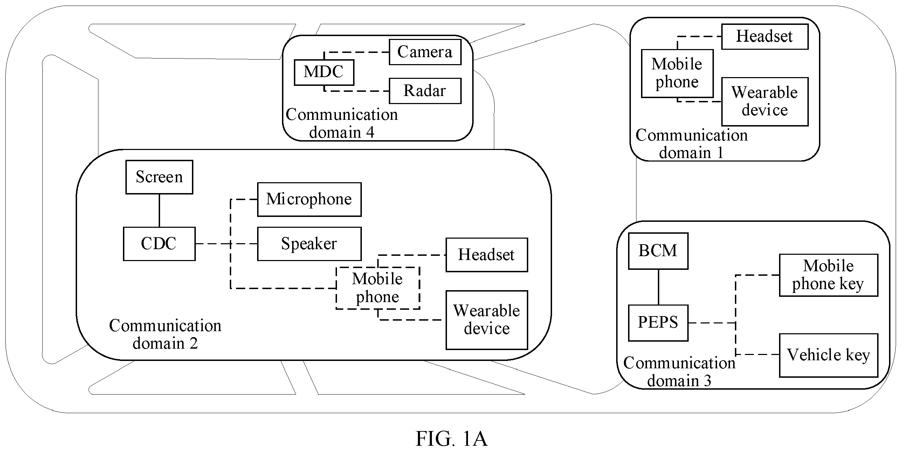

For example, if the technical solutions provided in embodiments of this application are applied to the in-vehicle wireless communication scenario, a network architecture shown in FIG. 1A may be a network architecture applied in embodiments of this application. It may be understood that, if the technical solutions provided in embodiments of this application are applied to another wide area communication scenario or another local area communication scenario, a network architecture applied in embodiments of this application may be correspondingly changed.

As shown in FIG. 1A, there are a plurality of communication domains in a vehicle, and one communication domain includes at least one sending node and at least one receiving node. The sending node can send data (such as audio data, video data, or picture data) to the receiving node, so that the receiving node presents the data to a user. For example, in FIG. 1A, a mobile phone, a headset, and a wearable device belong to a communication domain, for example, referred to as a communication domain 1, where the mobile phone is a sending node, and the headset and the wearable device are receiving nodes. A CDC, a display screen, a microphone, and a speaker belong to a communication domain, for example, referred to as a communication domain 2, where the CDC is a sending node, and the display screen, the microphone, and the speaker are receiving nodes. A passive entry passive start system (passive entry passive start, PEPS), a body control module (body control module, BCM), a mobile phone key, and a vehicle key belong to a communication domain, for example, referred to as a communication domain 3, where the PEPS is a sending node, and the BCM, the mobile phone key, and the vehicle key are receiving nodes. An MDC, a camera, and a radar belong to a communication domain, for example, referred to as a communication domain 4, where the camera and the radar are sending nodes, and the MDC is a receiving node. In addition, a sending node in one communication domain may also be used as a receiving node in another communication domain. For example, the mobile phone in the communication domain 1 may be used as a receiving node in the communication domain 2. In addition, a sending node of a communication domain may also be used as a receiving node. For example, the microphone may be used as a sending node to send collected audio data to the CDC.

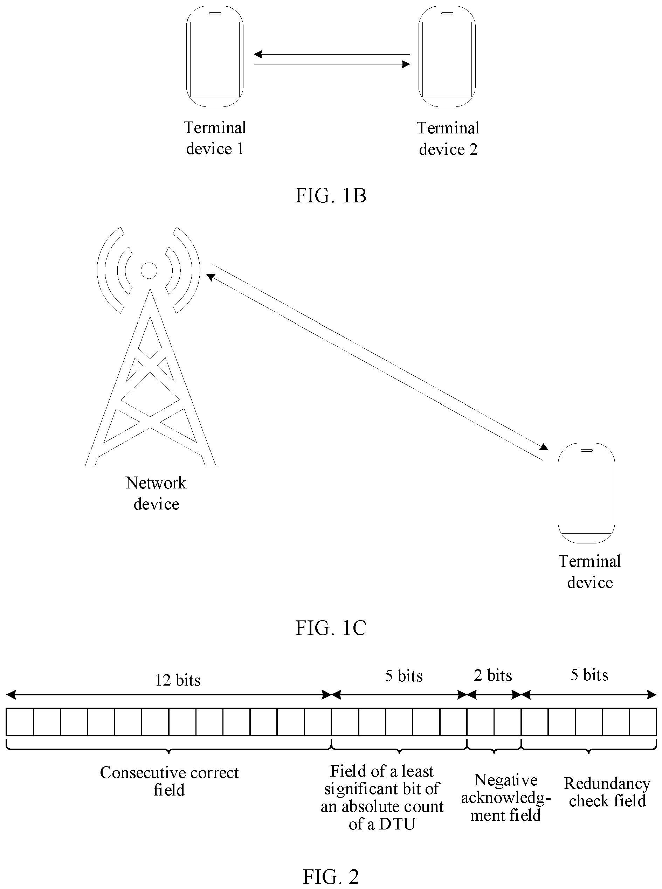

For another example, when the technical solution provided in embodiments of this application is applied to a V2X communication scenario, FIG. 1B is an application scenario of embodiments of this application. FIG. 1B includes a terminal device 1 and a terminal device 2. The terminal device 1 and the terminal device 2 can communicate with each other through a sidelink (sidelink, SL). For example, the terminal device 1 may be used as a sending node, and the terminal device 2 may be used as a receiving node. The terminal device 1 may send a data packet to the terminal device 2, and the terminal device 2 feeds back a receiving status of the data packet to the terminal device 1, so that the terminal device 1 retransmits an incorrectly received data packet and releases a resource occupied by a correctly received data packet.

For another example, when the technical solutions provided in embodiments of this application are applied to communication of a Uu interface in a long term evolution (long term evolution, LTE) system or a new radio (new radio, NR) system, FIG. 1C is an application scenario of embodiments of this application. FIG. 1C includes a network device and a terminal device. The network device and the terminal device can communicate with each other through a Uu interface.

In FIG. 1B and FIG. 1C, an example in which the terminal device is a mobile phone is used. However, the terminal device in embodiments of this application is not limited thereto.

The foregoing describes some noun concepts involved in embodiments of this application and application scenarios to which embodiments of this application are applicable. The following describes technical features in embodiments of this application.

Based on the development of intelligent transportation system and sensor network technologies, a vehicle-mounted communication system is a communication system that applies communication technologies to vehicles to implement highly information-based and intelligent transportation. The vehicle-mounted communication system has high requirements on system stability, for example, a bit error rate is lower than 1 × 10⁻¹⁵. In the in-vehicle scenario, a signal transmission environment is poor, for example, noise interference (such as noise generated by a motor and noise generated by a controller) of a vehicle and interference from an external environment (such as interference from wireless communication and lightning interference). Therefore, some technical solutions need to be used to reduce impact caused by the poor signal transmission environment and improve system stability. A retransmission technology is a technology that can improve stability of the vehicle-mounted communication system. In the retransmission technology, a receiving node sends a receiving status of a data packet to a sending node, and the sending node may retransmit an incorrectly received data packet based on the receiving status of the data packet. In this way, a bit error rate can be reduced, and system stability can be improved.

Currently, the receiving node may indicate the receiving status of the data packet to the sending node in the following two manners.

Manner 1: The receiving node indicates a receiving status of each data packet to the sending node in a bit (bit) mapping manner. For example, the receiving node uses 1 bit to indicate a receiving status of a data packet. For example, 1 represents correct receiving, and 0 represents incorrect receiving.

In Manner 1, each data packet needs one bit to indicate the receiving status. When there are a large quantity of data packets, a large quantity of network resources need to be occupied, and coding efficiency is reduced. In addition, uplink and downlink sending rates in the in-vehicle scenario are not equal, that is, a rate at which the sending node sends a data packet is greater than a rate at which the receiving node feeds back a receiving status of the data packet. For example, a ratio of the uplink sending rate to the downlink sending rate may be 100:1. This means that the receiving node cannot feed back the receiving status of the data packet to the sending node in real time. In this case, the sending node cannot release a resource occupied by a correctly received data packet in time, and cannot retransmit an incorrectly received data packet to the receiving node in time. This reduces resource utilization and is not conducive to improving system stability.

Manner 2: The receiving node can send a retransmission indication frame to the sending node, and the sending node can determine a receiving status of a data packet based on content indicated by the retransmission indication frame. For a structure of the retransmission indication frame, refer to FIG. 2.

As shown in FIG. 2, the retransmission indication frame includes four fields: a redundancy check (redundancy) field, a consecutive correctness (ConsecutiveGood) field, a negative acknowledgment (negative acknowledgement, NACK) field, and a field of a least significant bit of an absolute count of a data transfer unit (least significant bit of the absolute count of the data transfer unit, AbsoluteDTUCountLsbs).

The AbsoluteDTUCountLsbs field occupies 5 bits, and indicates a least significant bit of an absolute number of a last data transmission unit (data transfer unit, DTU) received by the receiving node. The NACK field occupies 2 bits, and indicates receiving statuses of a last data packet and a penultimate data packet respectively. For example, 1 indicates correct receiving, and 0 indicates incorrect receiving. If the NACK field is 10, the NACK field indicates that the last data packet is a correctly received data packet and the penultimate data packet is an incorrectly received data packet. If the NACK field is 01, the NACK field indicates that the last data packet is an incorrectly received data packet and the penultimate data packet is a correctly received data packet. If the NACK field is 00, the NACK field indicates that both the last data packet and the penultimate data packet are incorrectly received data packets. If the NACK field is 11, the NACK field indicates that both the last data packet and the penultimate data packet are correctly received data packets. The ConsecutiveGood field occupies 5 bits. When the penultimate data packet is a correctly received data packet, the ConsecutiveGood field indicates a quantity of correctly received data packets counted backward from the penultimate data packet. When the penultimate data packet is an incorrectly received data packet, the ConsecutiveGood field indicates a quantity of correctly received data packets counted forward from the first data packet. The redundancy field occupies 12 bits and is for performing redundancy check on the retransmission indication frame.

In Manner 2, the retransmission indication frame fixedly indicates receiving statuses of the last data packet and the penultimate data packet, and flexibility is relatively poor. In addition, receiving statuses of some data packets cannot be indicated, which is not conducive to improving system stability. For example, if a quantity of data packets indicated by the retransmission indication frame is 6, the penultimate data packet is an incorrectly received data packet, and the number of correctly received data packets counted forward from the first data packet is 2, the retransmission indication frame cannot indicate the receiving statuses of a third data packet and a fourth data packet.

In view of this, embodiments of this application provide a transmission indication method, apparatus, and system, to efficiently feed back a receiving status of a data packet to a second communication apparatus.

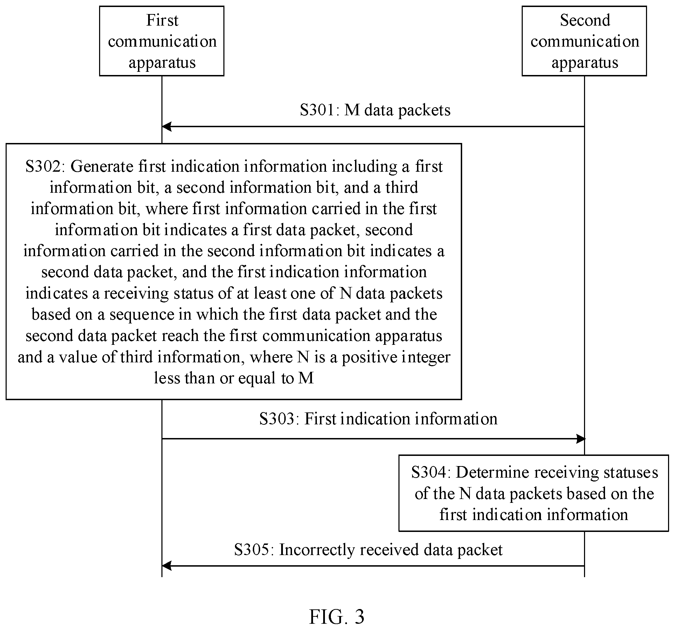

An embodiment of this application provides a transmission indication method. FIG. 3 is a flowchart of the method. In the following description process, an example in which the method is applied to the network architecture shown in any one of FIG. 1A to FIG. 1C is used.

For ease of description, an example in which the method is performed by a first communication apparatus and a second communication apparatus is used in the following description. If this embodiment is applied to the network architecture shown in FIG. 1A, the first communication apparatus described below may be any receiving node in any communication domain shown in FIG. 1A, for example, the headset in the communication domain 1, the microphone in the communication domain 2, or the MDC in the communication domain 4, or the first communication apparatus may be a chip system disposed in any receiving node in any communication domain shown in FIG. 1A. The second communication apparatus described below may be any sending node in any communication domain shown in FIG. 1A, for example, the mobile phone in the communication domain 1, the CDC in the communication domain 2, or the radar in the communication domain 4, or the second communication apparatus may be a chip system disposed in any sending node in any communication domain shown in FIG. 1A. Alternatively, if this embodiment is applied to the network architecture shown in FIG. 1B, the first communication apparatus described below may be the terminal device 1 shown in FIG. 1B, and the second communication apparatus described below may be the terminal device 2 shown in FIG. 1B. Alternatively, if this embodiment is applied to the network architecture shown in FIG. 1C, the first communication apparatus described below may be the terminal device shown in FIG. 1C, and the second communication apparatus described below may be the network device shown in FIG. 1C.

S301: The second communication apparatus sends M data packets to the first communication apparatus. Correspondingly, the first communication apparatus receives the M data packets from the second communication apparatus.

The first communication apparatus receives the M data packets from the second communication apparatus. M is a positive integer greater than or equal to 1. The data packets may be video data, audio data, a picture, or the like. A specific form of the data packet is not limited in this embodiment of this application. For example, the second communication apparatus may send the M data packets to the first communication apparatus after receiving a request message from the first communication apparatus for obtaining the M data packets. Alternatively, the second communication apparatus may actively push the M data packets to the first communication apparatus.

It should be noted that in this embodiment of this application, a sequence in which the second communication apparatus sends the data packets is consistent with a sequence in which the first communication apparatus receives the data packets. For example, the second communication apparatus sends three data packets to the first communication apparatus in a sequence of a data packet 0, a data packet 1, and a data packet 2. Correspondingly, the first communication apparatus receives the three data packets in a sequence of the data packet 0, the data packet 1, and the data packet 2.

S302: The first communication apparatus generates first indication information.

For example, the first communication apparatus may generate the first indication information based on receiving statuses of the M data packets. The first indication information indicates a receiving status of at least one of N data packets. N is a positive integer greater than or equal to 1 and less than or equal to M, that is, the first communication apparatus receives the M data packets from the second communication apparatus, and may indicate receiving statuses of all or some of the M data packets to the second communication apparatus. When N is greater than 1, the N data packets may be a plurality of data packets that consecutively reach the first communication apparatus in the M data packets. For example, identifiers of the N data packets are consecutive.

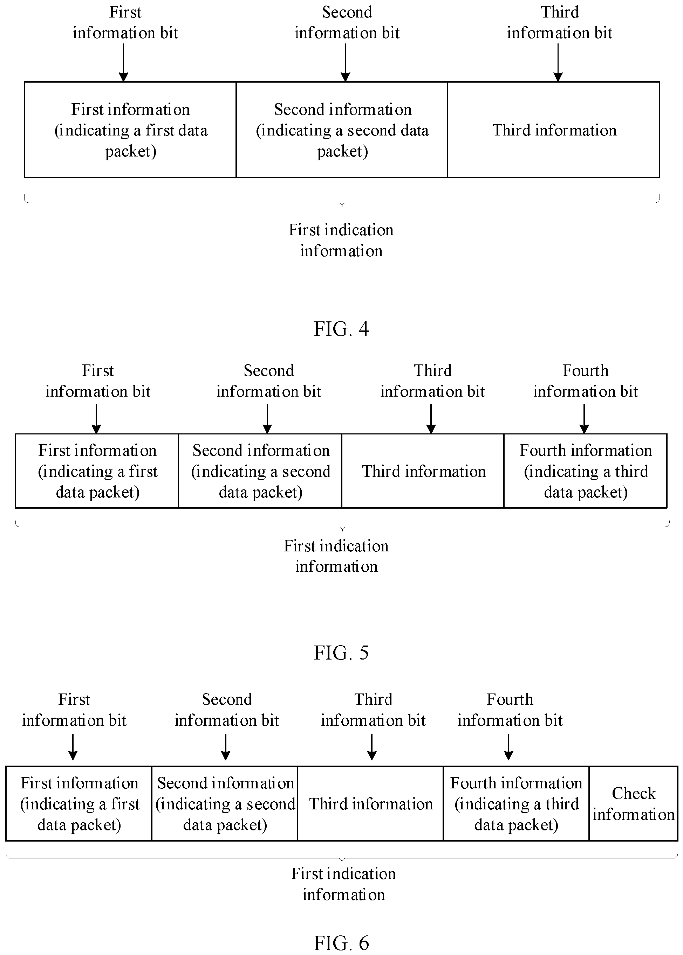

In an example, for a structure of the first indication information, refer to FIG. 4. As shown in FIG. 4, the first indication information may include a first information bit, a second information bit, and a third information bit. The first information bit carries first information, the second information bit carries second information, and the third information bit carries third information. The first information may be encoded into an identifier of a data packet in *N*ₘₐₓ data packets, and indicates one of the N data packets. The second information may be encoded into an identifier of a data packet in the *N*ₘₐₓ data packets, and indicates one of the N data packets. The third information may be encoded into different values. For example, the third information occupies 2 bits, and a value of the third information may be 00, 01, 10, or 11.

For ease of understanding this embodiment of this application, the following uses an example in which the first information indicates a first data packet in the N data packets, and the second information indicates a second data packet in the N data packets for description. Correspondingly, the first information may be encoded into an identifier of the first data packet in the *N*ₘₐₓ data packets, and the second information may be encoded into an identifier of the second data packet in the *N*ₘₐₓ data packets. The first information and the second information may indicate a same data packet, or may indicate different data packets. The first information and the second information indicate a same data packet, which means that the first data packet and the second data packet are a same data packet. The first information and the second information indicate different data packets, which means that the first data packet and the second data packet are different data packets.

It should be understood that the first information bit may be a field, for example, denoted as an index (index, IND) 1 field, or may be a part of a field. Similarly, the second information bit may be a field, for example, denoted as an IND2 field, or may be a part of a field. The third information bit may also be a field, for example, denoted as an encoding mode (encode mode), or may be a part of a field. Specific forms of the first information bit, the second information bit, and the third information bit are not limited in this embodiment of this application. The first information bit and the second information bit may be a set of a plurality of information bits. A position relationship between the first information bit and the second information bit may be agreed by the first communication apparatus and the second communication apparatus in advance, or specified in a protocol.

In an example, the first indication information further carries fourth information, and the fourth information may indicate a third data packet. For example, the fourth information is carried in a fourth information bit in the first indication information, as shown in FIG. 5. The fourth information bit may be a field, for example, denoted as a number (number) field, or may be a part of a field. A specific form of the fourth information bit is not limited in this embodiment of this application. A quantity of bits occupied by the fourth information bit may be used for determining a maximum quantity of data packets indicated by the first indication information, that is, a maximum quantity of data packets included in a process that the first communication apparatus feeds back a receiving status of a data packet once, that is, *N*_{max.} For example, if the fourth information bit occupies n bits, the maximum quantity of data packets indicated by the first indication information is *N*ₘₐₓ = 2*ⁿ.* The fourth information indicates the third data packet, that is, indicates a last data packet in the N data packets that reaches the first communication apparatus. For example, the first communication apparatus may encode the fourth information into an identifier of the third data packet in the M data packets. For another example, the first communication apparatus may encode the fourth information into the identifier of the third data packet in the M data packets based on a low-bit coding scheme predefined in a protocol or agreed by the first communication apparatus and the second communication apparatus in advance.

For example, M is equal to 16, that is, the first communication apparatus receives 16 data packets from the second communication apparatus, and identifiers of the M data packets are denoted as 0, 1, 2, ..., and 15. The fourth information bit occupies 3 bits, and the first indication information may indicate receiving statuses of a maximum of eight data packets, that is, *N*ₘₐₓ=8, *N*ₘₐₓ is greater than or equal to N, and identifiers of the *N*ₘₐₓ data packets are denoted as 0, 1, 2, ..., and 7. The first communication apparatus encodes the fourth information into the identifier of the third data packet in the M data packets, encodes the first information into an identifier of the first data packet in the *N*ₘₐₓ data packets, and encodes the second information into an identifier of the second data packet in the *N*ₘₐₓ data packets. For example, identifiers of the first data packet, the second data packet, and the third data packet in the M data packets are respectively 1, 2, and 3, and identifiers of the first data packet and the second data packet in the *N*ₘₐₓ data packets are also respectively 1, 2, and 3. The first communication apparatus may encode the first information as 001, encode the second information as 010, and encode the fourth information as 011. For another example, identifiers of the first data packet, the second data packet, and the third data packet in the M data packets are respectively 9, 10, and 11, and identifiers of the first data packet and the second data packet in the *N*ₘₐₓ data packets are respectively 1 and 2. The first communication apparatus may encode the first information as 001, and encode the second information as 010. Originally, the first communication apparatus needs to encode the fourth information as 1011, but the fourth information occupies only 3 bits. Therefore, the first communication apparatus may encode the fourth information as 011 based on a low-bit coding scheme predefined in a protocol or agreed by the first communication apparatus and the second communication apparatus in advance.

In another example, the first indication information further carries check information, and the check information may be used for performing redundancy check on the first indication information, as shown in FIG. 6. The check information may be a field, for example, denoted as a redundancy check (redundancy) field, or may be a part of a field. A specific form of the check information is not limited in this embodiment of this application.

In an example, a sequence in which the first data packet indicated by the first information and the second data indicated by the second information reach the first communication apparatus and a value of the third information may be used for the first indication information to indicate a receiving status of at least one of the N data packets, that is, the first indication information may indicate the receiving status of the at least one of the N data packets based on the sequence in which the first data packet and the second data packet reach the first communication apparatus and the value of the third information. For example, when the first information and the second information indicate different data packets, that is, the first data packet and the second data packet are different data packets, the first indication information may indicate receiving statuses of at least two of the N data packets based on a sequence in which the first data packet and the second data packet reach the first communication apparatus and the value of the third information. For example, the first indication information indicates only an incorrectly received data packet in the N data packets.

In another example, the value of the third information may be used to enable the first indication information to indicate the receiving status of the at least one of the N data packets, that is, the first indication information may indicate the receiving status of the at least one of the N data packets through the value of the third information. For example, when the first information and the second information indicate a same data packet, that is, the first data packet and the second data packet are a same data packet, the first indication information may indicate the receiving status of the at least one of the N data packets through the value of the third information. For example, the first indication information indicates only an incorrectly received data packet in the N data packets.

In step S302, the first communication apparatus may encode the first information, the second information, and the third information based on the receiving statuses of the M data packets by using different encoding modes, to generate the first indication information that can accurately indicate the receiving statuses of the N data packets in the M data packets. This embodiment of this application provides the following ten encoding modes (which may be referred to as modes for short).

(1) Mode 1: When the first data packet indicated by the first information and the second data packet indicated by the second information is the same data packet, and the value of the third information is a first value, the first indication information indicates that all the N data packets are correctly received data packets.

All the N data packets are correctly received data packets. According to the mode 1, the first communication apparatus may encode the first information and the second information into an identifier of the same data packet, and encode the third information into the first value, to generate the first indication information. In this case, the first indication information may indicate that all the N data packets are correctly received data packets. The first information and the second information may be encoded into an identifier of any one of the N data packets.

(2) Mode 2: When the first data packet indicated by the first information and the second data packet indicated by the second information is the same data packet, and the value of the third information is a second value, the first indication information indicates that the first data packet is an incorrectly received data packet and that a data packet other than the first data packet (or the second data packet) in the N data packets is a correctly received data packet.

The N data packets include only one error set whose length is equal to 1, that is, include only one incorrectly received data packet. According to the mode 2, the first communication apparatus may encode the first information and the second information into the identifier of the incorrectly received data packet (that is, the identifier of the first data packet), and encode the third information into the second value, to generate the first indication information. In this case, the first indication information may indicate that the first data packet is the incorrectly received data packet, and that the data packet other than the first data packet in the N data packets is the correctly received data packet. Alternatively, the first indication information may only indicate that the first data packet is the incorrectly received data packet. For example, agreed by the first communication apparatus and the second communication apparatus in advance, or defined in a protocol, the first indication information only indicates the incorrectly received data packet. After receiving the first indication information, the second communication apparatus may consider by default that all data packets other than the incorrectly received data packet in the N data packets are correctly received data packets.

(3) Mode 3: When the first data packet indicated by the first information reaches the first communication apparatus before the second data packet indicated by the second information, and the value of the third information is a first value, the first indication information indicates that both the first data packet and the second data packet are incorrectly received data packets, and all data packets in the N data packets other than the first data packet and the second data packet are correctly received data packets.

The N data packets include two error sets whose lengths are equal to 1, that is, include two incorrectly received data packets. The two incorrectly received data packets include the first data packet and the second data packet, and the first data packet reaches the first communication apparatus before the second data packet. According to the mode 3, the first communication apparatus may encode the first information into the identifier of the first data packet, encode the second information into the identifier of the second data packet, and encode the third information into the first value, to obtain the first indication information. In this case, the first indication information may indicate that the first data packet and the second data packet are the incorrectly received data packets, and that the data packet other than the first data packet and the second data packet in the N data packets is correctly received data packets. Alternatively, the first indication information may only indicate that the first data packet and the second data packet are the incorrectly received data packets. For example, agreed by the first communication apparatus and the second communication apparatus in advance or defined in a protocol, the first indication information only indicates the incorrectly received data packet. After receiving the first indication information, the second communication apparatus may consider by default that all data packets other than the incorrectly received data packet in the N data packets are the correctly received data packets.

(4) Mode 4: When the first data packet indicated by the first information reaches the first communication apparatus after the second data packet indicated by the second information, and the value of the third information is the first value, the first indication information indicates that a plurality of data packets from the second data packet to the first data packet are incorrectly received data packets, and a data packet other than the incorrectly received data packet in the N data packets is the correctly received data packet.

The N data packets include one error set whose length is greater than 1, that is, include a plurality of consecutively incorrectly received data packets. A last data packet that reaches the first communication apparatus in the plurality of consecutively incorrectly received data packets is the first data packet, and a first data packet that reaches the first communication apparatus in the plurality of consecutively incorrectly received data packets is the second data packet. According to the mode 4, the first communication apparatus may encode the first information into the identifier of the first data packet, encode the second information into the identifier of the second data packet, and encode the third information into the first value, to obtain the first indication information. In this case, the first indication information may indicate that the plurality of data packets from the second data packet to the first data packet are incorrectly received data packets, and that the data packet other than the incorrectly received data packet in the N data packets is the correctly received data packet. Alternatively, the first indication information only indicates that the plurality of data packets from the second data packet to the first data packet are incorrectly received data packets.

For example, the data packet 0, the data packet 1, the data packet 2, a data packet 3, and a data packet 4 reach the first communication apparatus in sequence. The data packet 1, the data packet 2, and the data packet 3 are incorrectly received data packets. The first communication apparatus may encode the first information into the data packet 3, encode the second information into the data packet 1, and encode the third information into the first value in the mode 4.

(5) Mode 5: When the first data packet indicated by the first information reaches the first communication apparatus before the second data packet indicated by the second information, and the value of the third information is the second value, the first indication information indicates that the first data packet, the second data packet, and the third data packet are incorrectly received data packets, and that a data packet other than the incorrectly received data packets in the N data packets is a correctly received data packet.

The N data packets include three error sets whose lengths are equal to 1, that is, include three incorrectly received data packets, and any two of the three incorrectly received data packets are inconsecutive. In the three incorrectly received data packets, a data packet that first reaches the first communication apparatus is the first data packet, a data packet that second reaches the first communication apparatus is the second data packet, a data packet that third reaches the first communication apparatus is the third data packet, and the third data packet is a last data packet in the N data packets that reaches the first communication apparatus. According to the mode 5, the first communication apparatus may encode the first information into the identifier of the first data packet, encode the second information into the identifier of the second data packet, and encode the third information into the second value, to obtain the first indication information. In this case, the first indication information indicates that the first data packet, the second data packet, and the third data packet are incorrectly received data packets, and that the data packet other than the incorrectly received data packets in the N data packets is the correctly received data packet. Alternatively, the first indication information only indicates that the first data packet, the second data packet, and the third data packet are incorrectly received data packets.

For example, the data packet 0, the data packet 1, the data packet 2, the data packet 3, and the data packet 4 reach the first communication apparatus in sequence. The data packet 0, the data packet 2, and the data packet 4 are incorrectly received data packets. The first communication apparatus may encode the first information into the data packet 0, encode the second information into the data packet 2, and encode the third information into the second value in a manner of the mode 5.

In an example, the M data packets include only three error sets whose lengths are equal to 1, that is, include only three incorrectly received data packets, and any two of the three incorrectly received data packets are inconsecutive. Therefore, the first data packet indicated by the first information may be the data packet that first reaches the first communication apparatus in the three incorrectly received data packets, and the second data packet indicated by the second information may be the data packet that second reaches the first communication apparatus in the three incorrectly received data packets, the third data packet indicated by the fourth information may be the last data packet that reaches the first communication apparatus in the three incorrectly received data packets. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 5, and encode the third information into the second value.

For example, the M data packets are respectively the data packet 0, the data packet 1, the data packet 2, the data packet 3, the data packet 4, a data packet 5, and a data packet 6. The data packet 0, the data packet 3, and the data packet 5 are incorrectly received data packets. In this case, the first data packet indicated by the first information is the data packet 0, the second data packet indicated by the second information is the data packet 3, and the third data packet indicated by the fourth information is the data packet 5. The first communication apparatus may encode the fourth information into the identifier of the data packet 5 in the M data packets, encode the first information and the second information into the identifier of the data packet 0 in the *N*ₘₐₓ data packets and the identifier of the data packet 3 in the *N*ₘₐₓ data packets, and encode the third information into the second value, to obtain the first indication information, as shown in Table 1. The first indication information indicates receiving statuses of the data packet 0 to the data packet 5. That is, the data packet 0, the data packet 3, and the data packet 5 are incorrectly received data packets, and the data packet 1, the data packet 2, the data packet 4, and the data packet 6 are correctly received data packets.

**Table 1: First indication information**

| First information | Second information | Third information | Fourth information |
|---|---|---|---|
| Data packet 0 | Data packet 3 | Second value | Data packet 5 |

In another example, the M data packets include more than three error sets, and all lengths of first three of the error sets are 1, the first data packet indicated by the first information may be a data packet of a first error set in the first three error sets, the second data packet indicated by the second information may be a data packet of a second error set in the first three error sets, and the third data packet indicated by the fourth information may be a data packet of a last error set in the first three error sets. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 5, and encode the third information into the second value.

All the error sets in the M data packets may be error sets that are indicated. That is, the first communication apparatus has indicated, to the second communication apparatus, an incorrectly received data packet in the M data packets. In this way, repeated indication can improve system robustness. Alternatively, none of the error sets in the M data packets may be indicated. This is not limited in this embodiment of this application.

For example, the M data packets are respectively the data packet 0, the data packet 1, the data packet 2, the data packet 3, the data packet 4, the data packet 5, a data packet 6, and a data packet 7. The data packet 0, the data packet 2, the data packet 4, the data packet 6, and the data packet 7 are incorrectly received data packets. The first data packet indicated by the first information is the data packet 0, the second data packet indicated by the second information is the data packet 2, and the third data packet indicated by the fourth information is the data packet 4. The first communication apparatus may encode the fourth information into the identifier of the data packet 4 in the M data packets, encode the first information and the second information into the identifiers of the data packet 0 and the data packet 2 in the *N*ₘₐₓ data packets, and encode the third information into the second value, to obtain the first indication information, as shown in Table 2. The first indication information indicates receiving statuses of the data packet 0 to the data packet 4. That is, the data packet 0, the data packet 2, and the data packet 4 are incorrectly received data packets, and the data packet 1 and the data packet 3 are correctly received data packets.

**Table 2: First indication information**

| First information | Second information | Third information | Fourth information |
|---|---|---|---|
| Data packet 0 | Data packet 2 | Second value | Data packet 4 |

It should be noted that the first error set in the plurality of error sets means that a data packet in the first error set reaches the first communication apparatus before a data packet in another error set. Similarly, the second error set in the plurality of error sets refers to a data packet in the second error set that is reached after a data packet in the first error set and that is reached before a data packet in an error set other than the first error set in the plurality of error sets. The last error set in the plurality of error sets means that a data packet in the last error set reaches the first communication apparatus after a data packet in another error set.

In an encoding manner of the mode 5, the first indication information may indicate three inconsecutive error sets. When the three inconsecutive error sets are all indicated, the first communication apparatus may repeatedly indicate the three inconsecutive error sets, thereby improving the system robustness. When none of the three inconsecutive error sets is indicated, the first communication apparatus may encode the fourth information into n identifier of a data packet in the last error set in the M data packets, to ensure that the first indication information can indicate a receiving status of each of the N data packets, thereby improving the system stability.

(6) Mode 6: When the first data packet indicated by the first information reaches the first communication apparatus after the second data packet indicated by the second information, and the value of the third information is the second value, the first indication information indicates that the first data packet, the second data packet, and the third data packet are incorrectly received data packets, and a data packet between the second data packet and the first data packet, and a data packet between the first data packet and the third data packet are correctly received data packets.

The N data packets include more than three error sets, where lengths of last three error sets are equal to 1, that is, more than three data packets that are incorrectly received are included, and any two of the last three incorrectly received data packets are not adjacent. In the last three incorrectly received data packets, a data packet that first reaches the first communication apparatus is the second data packet, a data packet that second reaches the first communication apparatus is the first data packet, and a data packet that third reaches the first communication apparatus is the third data packet. According to the mode 6, the first communication apparatus may encode the first information into the identifier of the first data packet, encode the second information into the identifier of the second data packet, and encode the third information into the second value, to obtain the first indication information. In this case, the first indication information indicates that the first data packet, the second data packet, and the third data packet are incorrectly received data packets, and that a data packet between the second data packet and the first data packet and a data packet between the first data packet and the third data packet are correctly received data packets.

For example, the data packet 0, the data packet 1, the data packet 2, the data packet 3, the data packet 4, the data packet 5, the data packet 6, and the data packet 7 reach the first communication apparatus in sequence. The data packet 0, the data packet 2, the data packet 4, and the data packet 7 are incorrectly received data packets. The first communication apparatus may encode the first information into the data packet 4, encode the second information into the data packet 2, and encode the third information into the second value in a manner of the mode 6. In this case, the first indication information indicates that the data packet 2, the data packet 4, and the data packet 7 are incorrectly received data packets, and the data packet 3, the data packet 5, and the data packet 6 are correctly received data packets.

In an example, the M data packets include more than three error sets. In the error sets, only a last error set is not indicated, and other error sets are indicated, and lengths of the last error set and two error sets before the last error set are both equal to 1; or in the error sets, last two error sets are not indicated, other error sets are indicated, and lengths of the last two error sets and a last third error set are both 1. In this case, the first data packet indicated by the first information may be a data packet of a penultimate error set in the error sets, the second data packet indicated by the second information may be a data packet of the last error set in the error sets, and the third data packet indicated by the fourth information may be a data packet of the last error set in the error sets. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 6, and encode the third information into the second value.

For example, the M data packets are respectively the data packet 0, the data packet 1, the data packet 2, the data packet 3, the data packet 4, the data packet 5, the data packet 6, and the data packet 7. The data packet 0, the data packet 1, the data packet 3, the data packet 5, and the data packet 7 are incorrectly received data packets, and the data packet 0, the data packet 1, the data packet 3, and the data packet 5 are indicated (or the data packet 0, the data packet 1, and the data packet 3 are indicated). In this case, the first data packet is the data packet 5, the second data packet is the data packet 3, and the third data packet is the data packet 7. The first communication apparatus encodes the fourth information into an identifier of the data packet 7 in the M data packets, encodes the first information and the second information into identifiers of the data packet 5 and the data packet 3 in the *N*ₘₐₓ data packets, and encodes the third information into the second value, to obtain the first indication information, as shown in Table 3. The first indication information indicates receiving statuses of the data packet 3 to the data packet 7. The data packet 3, the data packet 5, and the data packet 7 are incorrectly received data packets, and the data packet 4 and the data packet 6 are correctly received data packets.

**Table 3: First indication information**

| First information | Second information | Third information | Fourth information |
|---|---|---|---|
| Data packet 5 | Data packet 3 | Second value | Data packet 7 |

In another example, the M data packets include more than three error sets, there are three or more error sets that are not indicated in the error sets from back to front, other error sets are indicated, and lengths of first three error sets in the three or more error sets that are not indicated are all equal to 1, the first data packet indicated by the first information may be a data packet of a second error set in the first three error sets, the second data packet indicated by the second information may be a data packet of a first error set in the first three error sets, and the third data packet indicated by the fourth information may be a data packet of a last error set in the first three error sets. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 6, and encode the third information into the second value.

For example, the M data packets are respectively the data packet 0, the data packet 1, the data packet 2, the data packet 3, the data packet 4, the data packet 5, the data packet 6, the data packet 7, and a data packet 8. The data packet 0, the data packet 2, the data packet 4, the data packet 6, and the data packet 8 are incorrectly received data packets, the data packet 0 are indicated, and the data packet 2, the data packet 4, the data packet 6, and the data packet 8 are not indicated. In this case, the first data packet is the data packet 2, the second data packet is the data packet 4, and the third data packet is the data packet 6. The first communication apparatus may encode the fourth information into the identifier of the data packet 6 in the M data packets, encode the first information and the second information into the identifiers of the data packet 4 and the data packet 2 in the *N*ₘₐₓ data packets, and encode the third information into the second value, to obtain the first indication information, as shown in Table 4. The first indication information indicates receiving statuses of the data packet 2 to the data packet 6. The data packet 2, the data packet 4, and the data packet 6 are incorrectly received data packets, and the data packet 3 and the data packet 5 are correctly received data packets.

**Table 4: First indication information**

| First information | Second information | Third information | Fourth information |
|---|---|---|---|
| Data packet 4 | Data packet 2 | Second value | Data packet 6 |

In an encoding manner of the mode 6, the first indication information may indicate three inconsecutive error sets. When the M data packets include more than three error sets, the last one or the last two error sets whose lengths are equal to 1 are not indicated, and lengths of the last three error sets are equal to 1, the first communication apparatus may encode the fourth information into an identifier of the data packet in a last error set that is not indicated in the M data packets, to indicate, to the second communication apparatus, a receiving status of the data packet that is not indicated. When the M data packets include more than three error sets, and more than three error sets are not indicated, the first communication apparatus may encode the fourth information into an identifier of a data packet of a last error set in first three error sets that are not indicated in the M data packets. In this way, receiving statuses of data packets that are not indicated may be indicated to the second communication apparatus in sequence based on a receiving sequence of data packets.

(7) Mode 7: When the first data packet indicated by the first information reaches the first communication apparatus before the second data packet indicated by the second information, and the value of the third information is the third value, the first indication information indicates that a plurality of data packets from the first data packet to the second data packet and the third data packet are incorrectly received data packets, and a data packet other than the incorrectly received data packets in the N data packets is a correctly received data packet.

The N data packets include two error sets, and the two error sets are respectively an error set whose length is greater than 1 and an error set whose length is equal to 1. A first data packet that reaches the first communication apparatus in the error set whose length is greater than 1 is the first data packet, a last data packet that reaches the first communication apparatus in the error set whose length is greater than 1 is the second data packet, and the error set whose length is equal to 1 includes the third data packet. According to the mode 7, the first communication apparatus may encode the first information into the identifier of the first data packet, encode the second information into the identifier of the second data packet, and encode the third information into the third value, to obtain the first indication information. In this case, the first indication information indicates that the plurality of data packets from the first data packet to the second data packet and the third data packet are incorrectly received data packets, and the data packet other than the incorrectly received data packet in the N data packets is a correctly received data packet. Alternatively, the first indication information only indicates that the plurality of data packets from the first data packet to the second data packet and the third data packet are incorrectly received data packets.

For example, the data packet 0, the data packet 1, the data packet 2, the data packet 3, the data packet 4, the data packet 5, the data packet 6, and the data packet 7 reach the first communication apparatus in sequence. The data packet 2 to the data packet 4, and the data packet 7 are incorrectly received data packets. The first communication apparatus may encode the first information into the data packet 2, encode the second information into the data packet 4, and encode the third information into the third value in a manner of the mode 7. In this case, the first indication information indicates that the data packet 2, the data packet 3, the data packet 4, and the data packet 7 are incorrectly received data packets, and the data packet 0, the data packet 1, the data packet 5, and the data packet 6 are correctly received data packets.

In an example, the M data packets include only two error sets: an error set whose length is greater than 1 and an error set whose length is equal to 1. A data packet of the error set whose length is greater than 1 reaches the first communication apparatus before a data packet of the error set whose length is equal to 1. In this case, the first data packet indicated by the first information may be a first data packet in the error set whose length is greater than 1, the second data packet indicated by the second information may be the last data packet in the error set whose length is greater than 1, and the third data packet indicated by the fourth information may be the data packet in the error set whose length is equal to 1. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 7, and encode the third information into the second value.

For example, the M data packets are respectively the data packet 0, the data packet 1, the data packet 2, the data packet 3, the data packet 4, the data packet 5, the data packet 6, and the data packet 7, where the data packet 0 to the data packet 3, and the data packet 5 are incorrectly received data packets. In this case, the first data packet is the data packet 0, the second data packet is the data packet 3, and the third data packet is the data packet 5. The first communication apparatus may encode the fourth information into an identifier of the data packet 5 in the M data packets, respectively encode the first information and the second information into identifiers of the data packet 0 and the data packet 3 in the *N*ₘₐₓ data packets, and encode the third information into a third value, to obtain the first indication information, as shown in Table 5. The first indication information indicates receiving statuses of the data packet 0 to the data packet 5. The data packet 0 to the data packet 3 and the data packet 5 are incorrectly received data packets, and the data packet 4 is a correctly received data packet.

**Table 5: First indication information**

| First information | Second information | Third information | Fourth information |
|---|---|---|---|
| Data packet 0 | Data packet 3 | Third value | Data packet 5 |

In another example, the M data packets include more than three error sets. In the error sets, a length of a first error set is greater than 1, and a length of a second error set is equal to 1. The first data packet indicated by the first information may be a first data packet in the error set whose length is greater than 1, the second data packet indicated by the second information may be a last data packet in the error set whose length is greater than 1, and the third data packet indicated by the fourth information may be a data packet in the error set whose length is equal to 1. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 7, and encode the third information into the second value.

All the error sets in the M data packets may be error sets that are indicated, that is, the first communication apparatus has indicated, to the second communication apparatus, the incorrectly received data packets in the M data packets. Alternatively, none of the error sets in the M data packets may be indicated. This is not limited in this embodiment of this application.

For example, the M data packets are respectively the data packet 0, the data packet 1, the data packet 2, the data packet 3, the data packet 4, the data packet 5, the data packet 6, and the data packet 7. The data packet 0 to the data packet 2, the data packet 4, the data packet 6, and the data packet 7 are incorrectly received data packets. In this case, the first data packet is the data packet 0, the second data packet is the data packet 2, and the third data packet is the data packet 4. The first communication apparatus may encode the fourth information into an identifier of the data packet 4 in the M data packets, respectively encode the first information and the second information into identifiers of the data packet 0 and the data packet 2 in the *N*ₘₐₓ data packets, and encode the third information into a third value, to obtain the first indication information, as shown in Table 6. The first indication information indicates receiving statuses of the data packet 0 to the data packet 4, that is, the data packet 0 to the data packet 2 and the data packet 4 are incorrectly received data packets, and the data packet 3 is a correctly received data packet.

**Table 6: First indication information**

| First information | Second information | Third information | Fourth information |
|---|---|---|---|
| Data packet 0 | Data packet 2 | Third value | Data packet 4 |

In an encoding manner of the mode 7, the first indication information may indicate an error set whose length is greater than 1 and an error set whose length is equal to 1. The M data packets include more than two error sets. In the error sets, a length of a first error set is greater than 1, and a length of a second error set is equal to 1. The first communication apparatus may encode the fourth information into an identifier of a data packet in the second error set in the M data packets. In this way, when the error sets in the M data packets are indicated, the first communication apparatus repeatedly indicates the first error set and the second error set, to improve system robustness. When no error set in the M data packets is indicated, the first communication apparatus may indicate in sequence, to the second communication apparatus based on a receiving sequence of data packets, receiving statuses of data packets that are not indicated.

(8) Mode 8: When the first data packet indicated by the first information reaches the first communication apparatus after the second data packet indicated by the second information, and the value of the third information is the third value, the first indication information indicates that a plurality of data packets from the second data packet to the first data packet and the third data packet are incorrectly received data packets, and a data packet between the first data packet and the third data packet is a correctly received data packet.

The N data packets include more than two error sets, and last two error sets are respectively an error set whose length is greater than 1 and an error set whose length is equal to 1. A first data packet that reaches the first communication apparatus in the error set whose length is greater than 1 is the second data packet, a last data packet that reaches the first communication apparatus in the error set whose length is greater than 1 is the first data packet, and the error set whose length is equal to 1 includes the third data packet. According to the mode 8, the first communication apparatus may encode the first information into the identifier of the first data packet, encode the second information into the identifier of the second data packet, and encode the third information into the third value, to obtain the first indication information. In this case, the first indication information indicates that the plurality of data packets from the second data packet to the first data packet and the third data packet are the incorrectly received data packets, and the data packet between the first data packet and the third data packet is the correctly received data packet.

For example, the data packet 0, the data packet 1, the data packet 2, the data packet 3, the data packet 4, the data packet 5, the data packet 6, and the data packet 7 reach the first communication apparatus in sequence. The data packet 0, the data packet 2 to the data packet 4, and the data packet 7 are incorrectly received data packets. The first communication apparatus may encode the first information into the data packet 4, encode the second information into the data packet 2, and encode the third information into the third value in a manner of the mode 8. In this case, the first indication information indicates that the data packet 2, the data packet 3, the data packet 4, and the data packet 7 are incorrectly received data packets, and the data packet 5 and the data packet 6 are correctly received data packets.

In an example, the M data packets include more than two error sets. In the error sets, only a last error set is not indicated, and other error sets are indicated. A length of the last error set is equal to 1, and a length of a penultimate error set is greater than 1. In this case, the first data packet indicated by the first information may be a last data packet in the penultimate error set, the second data packet indicated by the second information may be a first data packet in the penultimate error set, and the third data packet indicated by the fourth information may be a data packet in the last error set. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 8, and encode the third information into the third value.

For example, the M data packets are respectively the data packet 0, the data packet 1, the data packet 2, the data packet 3, the data packet 4, the data packet 5, the data packet 6, and the data packet 7. The data packet 0, the data packet 2 to the data packet 4, and the data packet 6 are incorrectly received data packets. The data packet 0, the data packet 2, the data packet 3, and the data packet 4 are indicated, and the data packet 6 is not indicated. In this case, the first data packet is the data packet 4, the second data packet is the data packet 2, and the third data packet is the data packet 6. The first communication apparatus may encode the fourth information into an identifier of the data packet 6 in the M data packets, respectively encode the first information and the second information into the identifiers of the data packet 4 and the data packet 2 in the *N*ₘₐₓ data packets, and encode the third information into the third value, to obtain the first indication information, as shown in Table 7. The first indication information indicates receiving statuses of the data packet 2 to the data packet 6. The data packet 2 to the data packet 4 and the data packet 6 are incorrectly received data packets, and the data packet 5 is a correctly received data packet.

**Table 7: First indication information**

| First information | Second information | Third information | Fourth information |
|---|---|---|---|
| Data packet 4 | Data packet 2 | Third value | Data packet 6 |

In another example, the M data packets include more than two error sets. In the error sets, two or more error sets are not indicated from back to front, and other error sets are indicated. First two error sets in the more than two error sets that are not indicated are respectively an error set whose length is greater than 1 and an error set whose length is equal to 1. In this case, the first data packet indicated by the first information may be a last data packet in the error set whose length is greater than 1, the second data packet indicated by the second information may be a first data packet in the error set whose length is greater than 1, and the third data packet indicated by the fourth information may be a data packet in the error set whose length is equal to 1. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 8, and encode the third information into the third value.

For example, the M data packets are respectively the data packet 0, the data packet 1, the data packet 2, the data packet 3, the data packet 4, the data packet 5, the data packet 6, the data packet 7, and the data packet 8. The data packet 0, the data packet 3, the data packet 4, the data packet 5, and the data packet 8 are incorrectly received data packets, and the data packet 0 is indicated. In this case, the first data packet is the data packet 5, the second data packet is the data packet 3, and the third data packet is the data packet 8. The first communication apparatus may encode the fourth information into an identifier of the data packet 8 in the M data packets, respectively encode the first information and the second information into the identifiers of the data packet 5 and the data packet 3 in the *N*ₘₐₓ data packets, and encode the third information into the third value, to obtain the first indication information, as shown in Table 8. The first indication information indicates receiving statuses of the data packet 3 to the data packet 8. The data packet 3 to the data packet 5 and the data packet 8 are incorrectly received data packets, and the data packet 6 to the data packet 7 are correctly received data packets.

**Table 8: First indication information**

| First information | Second information | Third information | Fourth information |
|---|---|---|---|
| Data packet 5 | Data packet 3 | Third value | Data packet 6 |

In an encoding manner of the mode 8, the first indication information may indicate an error set whose length is greater than 1 and an error set whose length is equal to 1. The M data packets include more than two error sets. In the more than two error sets, a first error set is indicated, and last two error sets are respectively an error set whose length is greater than 1 and an error set whose length is equal to 1. The first communication apparatus may encode the fourth information into an identifier of a data packet in the error set whose length is equal to 1 in the M data packets. In this way, when the last error set is not indicated, or neither of the last two error sets is indicated, the first communication apparatus may indicate the error sets that are indicated and that are not indicated in the mode 8.

(9) Mode 9: When the first data packet indicated by the first information reaches the first communication apparatus before the second data packet indicated by the second information, and the value of the third information is a fourth value, the first indication information indicates the first data packet and a plurality of data packets from the second data packet to the third data packet are incorrectly received data packets, and a data packet other than the incorrectly received data packets in the N data packets is a correctly received data packet.

The N data packets include two error sets, and the two error sets are respectively an error set whose length is equal to 1 and an error set whose length is greater than 1. The error set whose length is equal to 1 includes the first data packet, the first data packet that reaches the first communication apparatus in the error set whose length is greater than 1 is the second data packet, and a last data packet that reaches the first communication apparatus in the error set whose length is greater than 1 is the third data packet. According to the mode 9, the first communication apparatus may encode the first information into the identifier of the first data packet, encode the second information into the identifier of the second data packet, and encode the third information into the fourth value, to obtain the first indication information. In this case, the first indication information indicates that the first data packet and the plurality of data packets from the second data packet to the third data packet are the incorrectly received data packets, and that the data packet other than the incorrectly received data packet in the N data packets is the correctly received data packet. Alternatively, the first indication information only indicates that the first data packet and the plurality of data packets from the second data packet to the third data packet are the incorrectly received data packets.

For example, the data packet 0, the data packet 1, the data packet 2, the data packet 3, the data packet 4, the data packet 5, the data packet 6, and the data packet 7 reach the first communication apparatus in sequence. The data packet 2 and the data packet 4 to the data packet 7 are incorrectly received data packets. The first communication apparatus may encode the first information into the data packet 2, encode the second information into the data packet 4, and encode the third information into the fourth value in a manner of the mode 9. In this case, the first indication information indicates that the data packet 2, the data packet 4, the data packet 5, the data packet 6, and the data packet 7 are incorrectly received data packets, and the data packet 0, the data packet 1, and the data packet 3 are correctly received data packets.

In an example, the M data packets include only two error sets: an error set whose length is equal to 1 and an error set whose length is greater than 1. A data packet in the error set whose length is equal to 1 reaches the first communication apparatus before a data packet in the error set whose length is greater than 1. In this case, the first data packet indicated by the first information may be a data packet in the error set whose length is equal to 1, the second data packet indicated by the second information may be a first data packet in the error set whose length is greater than 1, and the third data packet indicated by the fourth information may be a last data packet in the error set whose length is greater than 1. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 9, and encode the third information into the fourth value.

For example, the M data packets are respectively the data packet 0, the data packet 1, the data packet 2, the data packet 3, the data packet 4, the data packet 5, the data packet 6, and the data packet 7. The data packet 0 and the data packet 5 to the data packet 7 are incorrectly received data packets. In this case, the first data packet is the data packet 0, the second data packet is the data packet 5, and the third data packet is the data packet 7. The first communication apparatus may encode the fourth information into an identifier of the data packet 7 in the M data packets, respectively encode the first information and the second information into identifiers of the data packet 0 and the data packet 5 in the *N*ₘₐₓ data packets, and encode the third information into the fourth value, to obtain the first indication information, as shown in Table 9. The first indication information indicates receiving statuses of the data packet 0 to the data packet 7. The data packet 0 and the data packet 5 to the data packet 7 are incorrectly received data packets, and the data packet 1 to the data packet 4 are correctly received data packets.

**Table 9: First indication information**

| First information | Second information | Third information | Fourth information |
|---|---|---|---|
| Data packet 0 | Data packet 5 | Fourth value | Data packet 7 |

In another example, the M data packets include more than two error sets. In the error sets, a length of a first error set is equal to 1, and a length of a second error set is greater than 1. The first data packet indicated by the first information may be a data packet in the first error set, the second data packet indicated by the second information may be a first data packet in the second error set, and the third data packet indicated by the fourth information may be a last data packet in the second error set. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 9, and encode the third information into the fourth value.

All the error sets in the M data packets may be error sets that are indicated, that is, the first communication apparatus has indicated, to the second communication apparatus, the incorrectly received data packets in the M data packets. Alternatively, none of the error sets in the M data packets may be indicated. This is not limited in this embodiment of this application.

For example, the M data packets are respectively the data packet 0, the data packet 1, the data packet 2, the data packet 3, the data packet 4, the data packet 5, the data packet 6, and the data packet 7. The data packet 0, the data packet 2 to the data packet 4, the data packet 6, and the data packet 7 are incorrectly received data packets. In this case, the first data packet is the data packet 0, the second data packet is the data packet 2, and the third data packet is the data packet 4. The first communication apparatus may encode the fourth information into an identifier of the data packet 4 in the M data packets, encode the first information and the second information into identifiers of the data packet 0 and the data packet 2 in the *N*ₘₐₓ data packets, and encode the third information into the fourth value, to obtain the first indication information, as shown in Table 10. The first indication information indicates receiving statuses of the data packet 0 to the data packet 4. The data packet 0 and the data packet 2 to the data packet 4 are incorrectly received data packets, and the data packet 1 is a correctly received data packet.

**Table 10: First indication information**

| First information | Second information | Third information | Fourth information |
|---|---|---|---|
| Data packet 0 | Data packet 2 | Fourth value | Data packet 4 |

In an encoding manner of the mode 9, the first indication information may indicate an error set whose length is equal to 1 and an error set whose length is greater than 1. The M data packets include more than two error sets. In the error sets, a length of a first error set is equal to 1, and a length of a second error set is greater than 1. The first communication apparatus may encode the fourth information into an identifier of the last data packet in the second error set in the M data packets. In this way, when the error sets in the M data packets are indicated, the first communication apparatus repeatedly indicates the first error set and the second error set, to improve system robustness. When no error set in the M data packets is indicated, the first communication apparatus may indicate in sequence, to the second communication apparatus based on a receiving sequence of data packets, receiving statuses of data packets that are not indicated.

(10) Mode 10: When the first data packet indicated by the first information reaches the first communication apparatus after the second data packet indicated by the second information, and the value of the third information is the fourth value, the first indication information indicates that the second data packet and a plurality of data packets from the first data packet to the third data packet are incorrectly received data packets, and a data packet between the second data packet and the first data packet is a correctly received data packet.

The N data packets include more than two error sets, and last two error sets are respectively an error set whose length is equal to 1 and an error set whose length is greater than 1. The error set whose length is equal to 1 includes the second data packet, a data packet that first reaches the first communication apparatus in the error set whose length is greater than 1 is the first data packet, and a last data packet that reaches the first communication apparatus in the error set whose length is greater than 1 is the third data packet. According to the mode 10, the first communication apparatus may encode the first information into the identifier of the first data packet, encode the second information into the identifier of the second data packet, and encode the third information into the fourth value, to obtain the first indication information. In this case, the first indication information indicates that the second data packet and the plurality of data packets from the first data packet to the third data packet are the incorrectly received data packets, and the data packet between the second data packet and the first data packet is the correctly received data packet.

For example, the data packet 0, the data packet 1, the data packet 2, the data packet 3, the data packet 4, the data packet 5, the data packet 6, and the data packet 7 reach the first communication apparatus in sequence. The data packet 0, the data packet 2, and the data packet 4 to the data packet 7 are the incorrectly received data packets. The first communication apparatus may encode the first information into the data packet 4, encode the second information into the data packet 2, and encode the third information into the fourth value in a manner of the mode 10. In this case, the first indication information indicates that the data packet 2, the data packet 4, the data packet 5, the data packet 6, and the data packet 7 are the incorrectly received data packets, and the data packet 3 is the correctly received data packet.

In an example, the M data packets include more than two error sets. In the error sets, only a last error set is not indicated, and other error sets are indicated. A length of the last error set is greater than 1, and a length of a penultimate error set is equal to 1. In this case, the first data packet indicated by the first information may be a first data packet in the last error set, the second data packet indicated by the second information may be a data packet in the penultimate error set, and the third data packet indicated by the fourth information may be a last data packet in the last error set. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 10, and encode the third information into the fourth value.

For example, the M data packets are respectively the data packet 0, the data packet 1, the data packet 2, the data packet 3, the data packet 4, the data packet 5, the data packet 6, and the data packet 7. The data packet 0, the data packet 2, and the data packet 4 to the data packet 6 are incorrectly received data packets, the data packet 0 and the data packet 2 are indicated, and the data packet 4 to the data packet 6 are not indicated. In this case, the first data packet is the data packet 4, the second data packet is the data packet 0, and the third data packet is the data packet 6. The first communication apparatus may encode the fourth information into an identifier of the data packet 6 in the M data packets, respectively encode the first information and the second information into the identifiers of the data packet 4 and the data packet 2 in the *N*ₘₐₓ data packets, and encode the third information into the fourth value, to obtain the first indication information, as shown in Table 11. The first indication information indicates receiving statuses of the data packet 2 to the data packet 6. The data packet 2 and the data packet 4 to the data packet 6 are incorrectly received data packets, and the data packet 3 is a correctly received data packet.

**Table 11: First indication information**

| First information | Second information | Third information | Fourth information |
|---|---|---|---|
| Data packet 4 | Data packet 2 | Fourth value | Data packet 6 |

In another example, the M data packets include more than two error sets. In the error sets, two or more error sets are not indicated from back to front, and other error sets are indicated. The first two error sets in the two or more error sets that are not indicated are respectively an error set whose length is equal to 1 and an error set whose length is greater than 1. In this case, the first data packet indicated by the first information may be a first data packet in the error set whose length is greater than 1, the second data packet indicated by the second information may be a data packet in the error set whose length is equal to 1, and the third data packet indicated by the fourth information may be a last data packet in the error set whose length is greater than 1. Further, the first communication apparatus may encode the fourth information into the identifier of the third data packet in the M data packets, then encode the first information and the second information into the identifiers of the first data packet and the second data packet in the *N*ₘₐₓ data packets respectively in the mode 10, and encode the third information into the fourth value.

For example, the M data packets are respectively the data packet 0, the data packet 1, the data packet 2, the data packet 3, the data packet 4, the data packet 5, the data packet 6, the data packet 7, the data packet 8, and a data packet 9. The data packet 0, the data packet 1, the data packet 3, the data packet 5, the data packet 6, the data packet 7, and the data packet 9 are the incorrectly received data packets. The data packet 0 and the data packet 1 are indicated, and other data packets are not indicated. In this case, the first data packet is the data packet 5, the second data packet is the data packet 3, and the third data packet is the data packet 7. The first communication apparatus may encode the fourth information into an identifier of the data packet 7 in the M data packets, respectively encode the first information and the second information into identifiers of the data packet 5 and the data packet 3 in the *N*ₘₐₓ data packets, and encode the third information into the fourth value, to obtain the first indication information, as shown in Table 12. The first indication information indicates receiving statuses of the data packet 3 to the data packet 7. The data packet 3 and the data packet 5 to the data packet 7 are incorrectly received data packets, and the data packet 4 is a correctly received data packet.

**Table 12: First indication information**

| First information | Second information | Third information | Fourth information |
|---|---|---|---|
| Data packet 5 | Data packet 3 | Fourth value | Data packet 7 |

In an encoding manner of the mode 10, the first indication information may indicate an error set whose length is equal to 1 and an error set whose length is greater than 1. The M data packets include more than two error sets. In the more than two error sets, a first error set is indicated, and last two error sets are respectively an error set whose length is equal to 1 and an error set whose length is greater than 1. The first communication apparatus may encode the fourth information into an identifier of a last data packet in the M data packets in the error set whose length is greater than 1. In this way, when the last error set is not indicated, or neither of the last two error sets is indicated, the first communication apparatus may indicate the error sets that are indicated and that are not indicated in the mode 10.

For ease of understanding this embodiment of this application, the first indication information corresponding to the mode 1 to the mode 10 may be shown in Table 13. a represents the identifier of the first data packet indicated by the first information, and b represents the identifier of the second data packet indicated by the second information. a=b represents that the first data packet and the second data packet are a same data packet, a<b represents that the first data packet reaches the first communication apparatus after the second data packet, and a>b represents that the first data packet reaches the first communication apparatus after the second data packet. Identifiers of the N data packets are 0 to N-1, [i, j] represent a plurality of data packets from a data packet i to a data packet j, and (i, j) represents a data packet between the data packet i and the data packet j, that is, one or more data packets from the data packet (i+1) to the data packet (j-1).

**Table 13: First indication information in different modes**

| Mode | Relationship between data packet a and data packet b | Third information | First indication information |
|---|---|---|---|
| Mode 1 | a=b | First value | Indicate that all the N data packets are correctly received data packets |
| Mode 2 | a=b | Second value | Indicate that the data packet a is an incorrectly received data packet, and other data packets are correctly received data packets |
| Mode 3 | a<b | First value | Indicate that the data packets a and b are incorrectly received data packets, and other data packets are correctly received data packets |
| Mode 4 | a>b | First value | Indicate data packets [b, a] are incorrectly received data packets, and other data packets are correctly received data packets |
| Mode 5 | a<b | Second value | Indicate that data packets a, b, and N-1 are incorrectly received data packets, and other data packets are correctly received data packets |
| Mode 6 | a>b | Second value | Indicate that data packets a, b, and N-1 are incorrectly received data packets, and data packets (b, a) and data packets (a, N-1) are correctly received data packets |
| Mode 7 | a<b | Third value | Indicate that data packets [a, b] and a data packet N-1 are incorrectly received data packets, and other data packets are correctly received data packets |
| Mode 8 | a>b | Third value | Indicate that data packets [b, a] and the data packet N-1 are incorrectly received data packets, and data packets (a, N-1) are correctly received data packets |
| Mode 9 | a<b | Fourth value | Indicate that the data packet a and data packets [b, N-1] are incorrectly received data packets, and other data packets are correctly received data packets |
| Mode 10 | a>b | Fourth value | Indicate that data packet b and data packets [a, N-1] are incorrectly received data packets, and data packets (b, a) are correctly received data packets |

It may be understood that values of the third information in different modes may be the same. For example, in the mode 1, the mode 3, and the mode 4, values of the third information are the same. The values of the third information in different modes may alternatively be different. For example, the value of the third information in the mode 1 is the first value, and the value of the third information in the mode 3 is a fifth value.

In step S302, the first communication apparatus generates the first indication information, and then the first communication apparatus may send the first indication information to the second communication apparatus, that is, content of step S303 is performed.

S303: The first communication apparatus sends the first indication information to the second communication apparatus. Correspondingly, the second communication apparatus receives the first indication information from the first communication apparatus.

For example, the first indication information may be carried in an acknowledgment (acknowledgement, ACK) ACK message or a NACK message. For example, when the receiving statuses of the N data packets are all correct receiving, the first indication information may be carried in the ACK message. When the N data packets include the incorrectly received data packet, the first indication information may be carried in the NACK message.

S304: The second communication apparatus determines the receiving statuses of the N data packets based on the first indication information.

For example, the second communication apparatus may decode the first indication information to obtain the first information, the second information, and the third information. For example, the second communication apparatus may obtain the first information from the first information bit, obtain the second information from the second information bit, and obtain the third information from the third information. Further, the second communication apparatus may further obtain the fourth information from the fourth information bit. The second communication apparatus may determine the receiving statuses of the N data packets in the first communication apparatus based on the sending sequence of the first data packet and the second data packet and the value of the third information. For a specific implementation process, refer to content shown in step S302. Details are not described herein again.

For example, when the first information and the second information indicate a same data packet, and the value of the third information is the first value, that is, the first indication information is encoded in the mode 1, the second communication apparatus may determine that all the N data packets are correctly received data packets. Alternatively, when the first information, the second information, and the third information all indicate the data packet 0, that is, the first indication information is encoded in the mode 2, and the first indication information indicates a receiving status of a data packet, the second communication apparatus may determine that the data packet is an incorrectly received data packet. Alternatively, when the first information indicates a first data packet in the N data packets, the second information indicates an N^{th} data packet in the N data packets, and the value of the third information is the first value, that is, the first indication information is encoded in the mode 3, the second communication apparatus may determine that all the N data packets are incorrectly received data packets. Alternatively, when the first information and the second information indicate different data packets, the second communication apparatus may determine that the N data packets include the correctly received data packets and the incorrectly received data packets. For a specific implementation process, refer to the content described in the mode 4 to the mode 10 in step S302. Details are not described herein again. Further, if the second communication apparatus determines, based on the first indication information, that the N data packets include the correctly received data packet, the second communication apparatus releases a resource (for example, a cached resource) occupied by the correctly received data packet.

When the second communication apparatus determines, based on the first indication information, that the N data packets include the incorrectly received data packet, the second communication apparatus may retransmit the incorrectly received data packet to the first communication apparatus, that is, content shown in step S305 is performed.

S305: The second communication apparatus sends the incorrectly received data packet to the first communication apparatus. Correspondingly, the first communication apparatus receives the incorrectly received data packet from the second communication apparatus.

For example, the second communication apparatus decodes the first indication information, and may determine which data packets are incorrectly received and which data packets are correctly received in the N data packets, so as to release the resource (for example, a cached resource) of the correctly received data packet and retransmit the incorrectly received data packet to the first communication apparatus. Certainly, if the first indication information indicates that all the N data packets are incorrectly received data packets, the second communication apparatus retransmits the N data packets. The second communication apparatus may determine, according to the content shown in Table 13 and step S302, which data packets are incorrectly received and which data packets are correctly received in the N data packets. A specific implementation process is not described herein again.

In the foregoing embodiment of this application, the first communication apparatus sends the first indication information to the second communication apparatus, to indicate the receiving statuses of the N data packets. The first indication information includes the first information, the second information, and the third information. The first indication information may indicate the receiving statuses of the N data packets based on the sequence in which the first data packet indicated by the first information and the second data packet indicated by the second information reach the first communication apparatus and the value of the third information. The receiving statuses of the N data packets are jointly indicated by three parts of content, and may indicate a combination of a plurality of receiving statuses of the N data packets. Therefore, the receiving statuses of the data packets can be efficiently fed back to the second communication apparatus with high adaptability and flexibility.

In the foregoing embodiments provided in this application, the method provided in embodiments of this application is separately described from a perspective of interaction between the first communication apparatus and the second communication apparatus. To implement the functions in the method provided in embodiments of this application, the first communication apparatus and the second communication apparatus may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

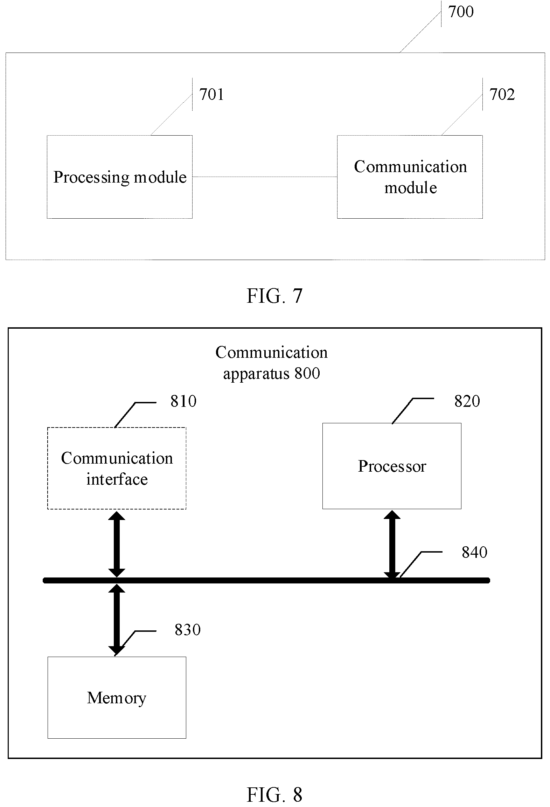

FIG. 7 is a schematic diagram of a structure of a transmission indication apparatus 700. The transmission indication apparatus 700 may be the first communication apparatus (or the second communication apparatus) in the embodiment shown in FIG. 3, and can implement functions of the first communication apparatus (or the second communication apparatus) in the method provided in embodiments of this application. Alternatively, the transmission indication apparatus 700 may be an apparatus that can support the first communication apparatus (or the second communication apparatus) in implementing functions of the first communication apparatus (or the second communication apparatus) in the method provided in embodiments of this application. The transmission indication apparatus 700 may be a hardware structure, a software module, or a combination of a hardware structure and a software module. The transmission indication apparatus 700 may be implemented by a chip system. In this embodiment of this application, the chip system may include a chip, or may include a chip and another discrete component.

The transmission indication apparatus 700 may include a processing module 701 and a communication module 702.

For example, the transmission indication apparatus 700 is the first communication apparatus. The communication module 702 may be configured to receive N data packets, where N is a positive integer greater than or equal to 1.

The processing module 701 may be configured to generate first indication information, where the first indication information includes a first information bit and a second information bit. The first information bit carries first information, and the second information bit carries second information. The first information indicates a first data packet in the N data packets, and the second information indicates a second data packet in the N data packets. The first indication information further carries third information. The first indication information indicates a receiving status of at least one of the N data packets based on a sequence in which the first data packet and the second data packet reach the first communication apparatus and a value of the third information, and the receiving status includes incorrect receiving and correct receiving.

The communication module 702 may further be configured to send the first indication information.

In a possible implementation, that the first indication information indicates a receiving status of at least one of the N data packets based on a sequence in which the first data packet and the second data packet reach the first communication apparatus and a value of the third information may be:
when the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets based on the sequence in which the first data packet and the second data packet reach the first communication apparatus and the value of the third information.

In a possible design, that the first indication information indicates receiving statuses of at least two of the N data packets based on the sequence in which the first data packet and the second data packet reach the first communication apparatus and the value of the third information may be:

When the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, where
the third data packet is a last data packet in the N data packets that reaches the first communication apparatus.

In a possible design, the first indication information further indicates that a data packet other than the incorrectly received data packets in the N data packets is a correctly received data packet.

In a possible implementation, that the first indication information indicates receiving statuses of at least two of the N data packets based on the sequence in which the first data packet and the second data packet reach the first communication apparatus and the value of the third information may be:
when the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrectly received data packets, and a data packet between the first data packet and the third data packet is a correctly received data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, where
the third data packet is the last data packet in the N data packets that reaches the first communication apparatus.

In a possible implementation, that the first indication information indicates the receiving status of the at least one of the N data packets through the value of the third information may be:
when the value of the third information is the first value, the first indication information indicates that all the N data packets are correctly received data packets; or
when the value of the third information is the second value, the first indication information indicates that the first data packet is an incorrectly received data packet.

In a possible implementation, when the value of the third information is the second value, the first indication information further indicates that a data packet other than the first data packet in the N data packets is a correctly received data packet.

In a possible implementation, the first indication information further carries fourth information, the fourth information indicates a third data packet, and the third data packet is the last data packet in the N data packets that reaches the first communication apparatus.

For example, the transmission indication apparatus 700 is the second communication apparatus. The communication module 702 may be configured to: send the N data packets to the first communication apparatus, where N is a positive integer greater than or equal to 1; and receive the first indication information from the first communication apparatus.

The processing module 701 may be configured to: obtain the first information from the first information bit of the first indication information, obtain the second information from the second information bit of the first indication information, and obtain the third information from the third information bit of the first indication information, where the first information indicates the first data packet in the N data packets, the second information indicates the second data packet in the N data packets, the first indication information indicates the receiving status of the at least one of the N data packets in the first communication apparatus through a sending sequence of the first data packet and the second data packet and the value of the third information, and the receiving status includes incorrect receiving and correct receiving; and determine the receiving statuses of the N data packets based on the first indication information.

In a possible implementation, that the first indication information indicates the receiving status of the at least one of the N data packets in the first communication apparatus through a sending sequence of the first data packet and the second data packet and the value of the third information may be:
when the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets in the first communication apparatus based on the sequence of sending the first data packet and the second data packet and the value of the third information.

In a possible implementation, that the first indication information indicates the receiving statuses of the at least two of the N data packets in the first communication apparatus based on the sequence of sending the first data packet and the second data packet and the value of the third information may be:
when the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, where
the third data packet is the last data packet in the N data packets that reaches the first communication apparatus.

In a possible implementation, the first indication information further indicates that the data packet other than the incorrectly received data packet in the N data packets is a correctly received data packet.

In a possible implementation, that the first indication information indicates the receiving statuses of the at least two of the N data packets in the first communication apparatus based on the sequence of sending the first data packet and the second data packet and the value of the third information may be:
when the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrectly received data packets, and a data packet between the first data packet and the third data packet is a correctly received data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, where
the third data packet is the last data packet in the N data packets that reaches the first communication apparatus.

In a possible implementation, that the first indication information indicates the receiving status of the at least one of the N data packets through the value of the third information may be:
when the value of the third information is the first value, the first indication information indicates that all the N data packets are correctly received data packets; or
when the value of the third information is the second value, the first indication information indicates that the first data packet is an incorrectly received data packet.

In a possible implementation, when the value of the third information is the second value, the first indication information further indicates that a data packet other than the first data packet in the N data packets is a correctly received data packet.

In a possible implementation, the first indication information further carries fourth information, the fourth information indicates a third data packet, and the third data packet is the last data packet in the N data packets that reaches the first communication apparatus.

In a possible implementation, when all the N data packets are correctly received data packets, the processing module 701 is further configured to release cached resources occupied by the N data packets; or
when all the N data packets are incorrectly received data packets, the communication module 702 is further configured to send the N data packets to the first communication apparatus; or
when the N data packets include an incorrectly received data packet and a correctly received data packet, the communication module 702 is further configured to send the incorrectly received data packet to the first communication apparatus, and the processing module 701 is further configured to release a cached resource occupied by the correctly received data packet.

The communication module 702 is configured for communication between the transmission indication apparatus 700 and another module, and may be a circuit, a component, an interface, a bus, a software module, a transceiver, or any other apparatus that can implement communication.

All related content of the steps in the foregoing method embodiments may be cited in function descriptions of the corresponding functional modules. Details are not described herein again.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

FIG. 8 shows a communication apparatus 800 according to an embodiment of this application. The communication apparatus 800 may be the first communication apparatus (or the second communication apparatus) in the embodiment shown in FIG. 3, and can implement functions of the first communication apparatus (or the second communication apparatus) in the method provided in embodiments of this application. Alternatively, the communication apparatus 800 may be an apparatus that can support the first communication apparatus (or the second communication apparatus) in implementing functions of the first communication apparatus (or the second communication apparatus) in the method provided in embodiments of this application. The communication apparatus 800 may be a chip system. In this embodiment of this application, the chip system may include a chip, or may include a chip and another discrete component.

In hardware implementation, the communication module 702 may be a transceiver, and the transceiver is integrated into the communication apparatus 800 to form a communication interface 810.

The communication apparatus 800 may include at least one processor 820, configured to implement or support the communication apparatus 800 in implementing a function of the first communication apparatus or the second communication apparatus in the method provided in embodiments of this application. For example, the processor 820 may generate first indication information based on receiving statuses of N data packets. For details, refer to detailed descriptions in the method example. Details are not described herein again. For another example, the processor 820 may determine the receiving statuses of the N data packets based on the first indication information. For details, refer to detailed descriptions in the method example. Details are not described herein again.

The communication apparatus 800 may further include at least one memory 830, configured to store program instructions and/or data. The memory 830 is coupled to the processor 820. The coupling in this embodiment of this application may be an indirect coupling or a communication connection between apparatuses, units, or modules in an electrical form, a mechanical form, or another form, and is used for information exchange between the apparatuses, the units, or the modules. The processor 820 and the memory 830 may operate cooperatively. The processor 820 may execute the program instructions stored in the memory 830. At least one of the at least one memory may be included in the processor.

The communication apparatus 800 may further include the communication interface 810, configured to communicate with another device through a transmission medium, so that an apparatus in the communication apparatus 800 may communicate with another device. For example, the communication apparatus 800 is a first communication apparatus, and the another device may be a second communication apparatus; or the communication apparatus 800 is a second communication apparatus, and the another device may be a first communication apparatus. The processor 820 may send and receive data through the communication interface 810. The communication interface 810 may be specifically a transceiver.

A specific connection medium between the communication interface 810, the processor 820, and the memory 830 is not limited in this embodiment of this application. In this embodiment of this application, in FIG. 8, the memory 830, the processor 820, and the communication interface 810 are connected by a bus 840. The bus is represented by a bold line in FIG. 8. A manner of connection between other components is merely an example for description, and is not limited thereto. The bus may be classified into an address bus, a data bus, a control bus, and the like. For ease of representation, only one thick line is used to represent the bus in FIG. 8, but this does not mean that there is only one bus or only one type of bus.

In this embodiment of this application, the processor 820 may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In this embodiment of this application, the memory 830 may be a non-volatile memory such as a hard disk drive (hard disk drive, HDD) or a solid-state drive (solid-state drive, SSD), or may be a volatile memory (volatile memory) such as a random-access memory (random-access memory, RAM). The memory is any other medium that can be configured to carry or store expected program code in a form of instructions or a data structure and that can be accessed by a computer, but is not limited thereto. The memory in embodiments of this application may alternatively be a circuit or any other apparatus that can implement a storage function, and is configured to store program instructions and/or data.

For example, a communication apparatus in embodiments of this application may be a vehicle-mounted device such as an in-vehicle infotainment, a vehicle-mounted speaker, or a vehicle-mounted microphone, or may be an electronic device such as a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, or a virtual reality device. Alternatively, the communication apparatus in embodiments of this application may be a function module disposed in any one of the foregoing devices, for example, a chip system.

An embodiment of this application further provides a computer-readable storage medium, including instructions. When the instructions are run on a computer, the computer is enabled to perform the method performed by the first communication apparatus in the foregoing embodiment.

An embodiment of this application further provides a computer-readable storage medium, including instructions. When the instructions are run on a computer, the computer is enabled to perform the method performed by the second communication apparatus in the foregoing embodiment.

An embodiment of this application further provides a computer program product, including instructions. When the instructions are run on a computer, the computer is enabled to perform the method performed by the first communication apparatus in the foregoing embodiment.

An embodiment of this application further provides a computer program product, including instructions. When the instructions are run on a computer, the computer is enabled to perform the method performed by the second communication apparatus in the foregoing embodiment.

An embodiment of this application provides a chip system. The chip system includes a processor, and may further include a memory, configured to implement functions of the first communication apparatus in the foregoing method. The chip system may include a chip, or may include a chip and another discrete component.

An embodiment of this application provides a chip system. The chip system includes a processor, and may further include a memory, configured to implement functions of the second communication apparatus in the foregoing method. The chip system may include a chip, or may include a chip and another discrete component.

An embodiment of this application provides a communication system. The communication system includes the first communication apparatus and/or the second communication apparatus in the foregoing embodiment.

All or some of the methods provided in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. This application is intended to cover these modifications and variations of this application provided that they fall within the scope of protection defined by the following claims and their equivalent technologies of this application.

## Claims

1. A transmission indication method, applied to a first communication apparatus, comprising:
receiving N data packets, wherein N is a positive integer greater than or equal to 1;
generating first indication information, wherein the first indication information comprises a first information bit and a second information bit, the first information bit carries first information, the second information bit carries second information, the first information indicates a first data packet in the N data packets, the second information indicates a second data packet in the N data packets, the first indication information further carries third information, the first indication information indicates a receiving status of at least one of the N data packets based on a sequence in which the first data packet and the second data packet reach the first communication apparatus and a value of the third information, and the receiving status comprises incorrect receiving and correct receiving; and
sending the first indication information.

2. The method according to claim 1, wherein that the first indication information indicates a receiving status of at least one of the N data packets based on a sequence in which the first data packet and the second data packet reach the first communication apparatus and a value of the third information comprises:
when the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets based on the sequence in which the first data packet and the second data packet reach the first communication apparatus and the value of the third information.

3. The method according to claim 1 or 2, wherein that the first indication information indicates a receiving status of at least one of the N data packets based on a sequence in which the first data packet and the second data packet reach the first communication apparatus and a value of the third information comprises:
indicating receiving statuses of the first data packet and the second data packet based on a sequence in which a first data packet indicated by the first information bit and a second data packet indicated by the second information bit reach the first communication apparatus; and
indicating, based on the receiving statuses of the first data packet and the second data packet and the value of the third information, a receiving status of at least one another data packet of the N data packets, or a receiving status of another data packet that is reached between the first data packet and the second data packet in the N data packets.

4. The method according to any one of claims 1 to 3, wherein that the first indication information indicates a receiving status of at least one of the N data packets based on a sequence in which the first data packet and the second data packet reach the first communication apparatus and a value of the third information comprises:
when the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, wherein
the third data packet is a last data packet in the N data packets that reaches the first communication apparatus.

5. The method according to claim 4, wherein
the first indication information further indicates that a data packet other than the incorrectly received data packets in the N data packets is a correctly received data packet.

6. The method according to any one of claims 1 to 5, wherein that the first indication information indicates a receiving status of at least one of the N data packets based on a sequence in which the first data packet and the second data packet reach the first communication apparatus and a value of the third information comprises:
when the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrect data packets, and a data packet between the first data packet and the third data packet is a correct data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, wherein
the third data packet is the last data packet in the N data packets that reaches the first communication apparatus.

7. The method according to claim 2, wherein that the first indication information indicates the receiving status of the at least one of the N data packets through the value of the third information comprises:
when the value of the third information is a first value, the first indication information indicates that all the N data packets are correctly received data packets; or
when the value of the third information is a second value, the first indication information indicates that the first data packet is an incorrectly received data packet.

8. The method according to claim 7, wherein
when the value of the third information is the second value, the first indication information further indicates that a data packet other than the first data packet in the N data packets is a correctly received data packet.

9. The method according to any one of claims 1 to 8, wherein the first indication information further carries fourth information, the fourth information indicates the third data packet, and the third data packet is the last data packet in the N data packets that reaches the first communication apparatus.

10. A transmission indication method, applied to a second communication apparatus, comprising:
sending N data packets to a first communication apparatus, wherein N is a positive integer greater than or equal to 1;
receiving first indication information from the first communication apparatus;
obtaining first information from a first information bit of the first indication information, obtaining second information from a second information bit of the first indication information, and obtaining third information from a third information bit of the first indication information, wherein the first information indicates a first data packet in the N data packets, the second information indicates a second data packet in the N data packets, the first indication information indicates a receiving status of at least one of the N data packets in the first communication apparatus through a sending sequence of the first data packet and the second data packet and a value of the third information, and the receiving status comprises incorrect receiving and correct receiving; and
determining receiving statuses of the N data packets based on the first indication information.

11. The method according to claim 10, wherein that the first indication information indicates a receiving status of at least one of the N data packets in the first communication apparatus through a sending sequence of the first data packet and the second data packet and a value of the third information comprises:
when the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets in the first communication apparatus based on the sequence of sending the first data packet and the second data packet and the value of the third information.

12. The method according to claim 10 or 11, wherein that the first indication information indicates a receiving status of at least one of the N data packets in the first communication apparatus through a sending sequence of the first data packet and the second data packet and a value of the third information comprises:
indicating receiving statuses of the first data packet and the second data packet based on a sequence of sending a first data packet indicated by the first information bit and a second data packet indicated by the second information bit; and
indicating, based on the receiving statuses of the first data packet and the second data packet and the value of the third information, a receiving status of at least one another data packet of the N data packets, or a receiving status of another data packet that is reached between the first data packet and the second data packet in the N data packets.

13. The method according to any one of claims 10 to 12, wherein that the first indication information indicates a receiving status of at least one of the N data packets in the first communication apparatus through a sending sequence of the first data packet and the second data packet and a value of the third information comprises:
when the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, wherein
the third data packet is a last data packet in the N data packets that reaches the first communication apparatus.

14. The method according to claim 13, wherein
the first indication information further indicates that a data packet other than the incorrectly received data packets in the N data packets is a correctly received data packet.

15. The method according to any one of claims 10 to 14, wherein that the first indication information indicates a receiving status of at least one of the N data packets in the first communication apparatus through a sending sequence of the first data packet and the second data packet and a value of the third information comprises:
when the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrect data packets, and a data packet between the first data packet and the third data packet is a correct data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, wherein
the third data packet is the last data packet in the N data packets that reaches the first communication apparatus.

16. The method according to claim 11, wherein that the first indication information indicates the receiving status of the at least one of the N data packets through the value of the third information comprises:
when the value of the third information is a first value, the first indication information indicates that all the N data packets are correctly received data packets; or
when the value of the third information is a second value, the first indication information indicates that the first data packet is an incorrectly received data packet.

17. The method according to claim 16, wherein
when the value of the third information is the second value, the first indication information further indicates that a data packet other than the first data packet in the N data packets is a correctly received data packet.

18. The method according to any one of claims 10 to 17, wherein the first indication information further carries fourth information, the fourth information indicates the third data packet, and the third data packet is the last data packet in the N data packets that reaches the first communication apparatus.

19. The method according to any one of claims 10 to 18, wherein the method further comprises:
when all the N data packets are correctly received data packets, releasing cached resources occupied by the N data packets; or
when all the N data packets are incorrectly received data packets, sending the N data packets to the first communication apparatus; or
when the N data packets comprise an incorrectly received data packet and a correctly received data packet, sending the incorrectly received data packet to the first communication apparatus and releasing a cached resource occupied by the correctly received data packet.

20. A transmission indication apparatus, comprising:
a communication module, configured to receive N data packets, wherein N is a positive integer greater than or equal to 1; and
a processing module, configured to generate first indication information, wherein the first indication information comprises a first information bit and a second information bit, the first information bit carries first information, the second information bit carries second information, the first information indicates a first data packet in the N data packets, the second information indicates a second data packet in the N data packets, the first indication information further carries third information, the first indication information indicates a receiving status of at least one of the N data packets based on a sequence in which the first data packet and the second data packet reach the first communication apparatus and a value of the third information, and the receiving status comprises incorrect receiving and correct receiving, wherein
the communication module is further configured to send the first indication information.

21. The apparatus according to claim 20, wherein that the first indication information indicates a receiving status of at least one of the N data packets based on a sequence in which the first data packet and the second data packet reach the first communication apparatus and a value of the third information comprises:
when the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets based on the sequence in which the first data packet and the second data packet reach the first communication apparatus and the value of the third information.

22. The apparatus according to claim 20 or 21, wherein that the first indication information indicates a receiving status of at least one of the N data packets based on a sequence in which the first data packet and the second data packet reach the first communication apparatus and a value of the third information comprises:
indicating receiving statuses of the first data packet and the second data packet based on a sequence in which a first data packet indicated by the first information bit and a second data packet indicated by the second information bit reach the first communication apparatus; and
indicating, based on the receiving statuses of the first data packet and the second data packet and the value of the third information, a receiving status of at least one another data packet of the N data packets, or a receiving status of another data packet that is reached between the first data packet and the second data packet in the N data packets.

23. The apparatus according to claim 20 to 22, wherein that the first indication information indicates a receiving status of at least one of the N data packets based on a sequence in which the first data packet and the second data packet reach the first communication apparatus and a value of the third information comprises:
when the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, wherein
the third data packet is a last data packet in the N data packets that reaches the first communication apparatus.

24. The apparatus according to claim 23, wherein
the first indication information further indicates that a data packet other than the incorrectly received data packets in the N data packets is a correctly received data packet.

25. The apparatus according to claim 20 to 24, wherein that the first indication information indicates a receiving status of at least one of the N data packets based on a sequence in which the first data packet and the second data packet reach the first communication apparatus and a value of the third information comprises:
when the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrect data packets, and a data packet between the first data packet and the third data packet is a correct data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, wherein
the third data packet is the last data packet in the N data packets that reaches the first communication apparatus.

26. The apparatus according to claim 21, wherein that the first indication information indicates the receiving status of the at least one of the N data packets through the value of the third information comprises:
when the value of the third information is a first value, the first indication information indicates that all the N data packets are correctly received data packets; or
when the value of the third information is a second value, the first indication information indicates that the first data packet is an incorrectly received data packet.

27. The apparatus according to claim 26, wherein
when the value of the third information is the second value, the first indication information further indicates that a data packet other than the first data packet in the N data packets is a correctly received data packet.

28. The apparatus according to any one of claims 20 to 27, wherein the first indication information further carries fourth information, the fourth information indicates the third data packet, and the third data packet is the last data packet in the N data packets that reaches the first communication apparatus.

29. A transmission indication apparatus, comprising:
a communication module, configured to send N data packets to a first communication apparatus, wherein N is a positive integer greater than or equal to 1; and receive first indication information from the first communication apparatus; and
a processing module, configured to obtain first information from a first information bit of the first indication information, obtain second information from a second information bit of the first indication information, and obtain third information from a third information bit of the first indication information, wherein the first information indicates a first data packet in the N data packets, the second information indicates a second data packet in the N data packets, the first indication information indicates a receiving status of at least one of the N data packets in the first communication apparatus through a sending sequence of the first data packet and the second data packet and a value of the third information, and the receiving status comprises incorrect receiving and correct receiving; and determine receiving statuses of the N data packets based on the first indication information.

30. The apparatus according to claim 29, wherein that the first indication information indicates a receiving status of at least one of the N data packets in the first communication apparatus through a sending sequence the first data packet and the second data packet and a value of the third information comprises:
when the first data packet and the second data packet are a same data packet, the first indication information indicates the receiving status of the at least one of the N data packets through the value of the third information; or
when the first data packet and the second data packet are different data packets, the first indication information indicates receiving statuses of at least two of the N data packets in the first communication apparatus based on the sequence of sending the first data packet and the second data packet and the value of the third information.

31. The apparatus according to claim 29 or 30, wherein that the first indication information indicates a receiving status of at least one of the N data packets in the first communication apparatus through a sending sequence of the first data packet and the second data packet and a value of the third information comprises:
indicating receiving statuses of the first data packet and the second data packet based on a sequence of sending a first data packet indicated by the first information bit and a second data packet indicated by the second information bit; and
indicating, based on the receiving statuses of the first data packet and the second data packet and the value of the third information, a receiving status of at least one another data packet of the N data packets, or a receiving status of another data packet that is reached between the first data packet and the second data packet in the N data packets.

32. The apparatus according to any one of claims 29 to 31, wherein that the first indication information indicates a receiving status of at least one of the N data packets in the first communication apparatus through a sending sequence of the first data packet and the second data packet and a value of the third information comprises:
when the first data packet reaches the first communication apparatus before the second data packet and the value of the third information is a first value, the first indication information indicates that the first data packet and the second data packet are incorrectly received data packets; or
when the first data packet reaches the first communication apparatus before the second data packet and the value of the third information is a second value, the first indication information indicates that the first data packet, the second data packet, and a third data packet are incorrectly received data packets; or
when the first data packet reaches the first communication apparatus before the second data packet and the value of the third information is a third value, the first indication information indicates that a third data packet and a plurality of data packets from the first data packet to the second data packet are incorrectly received data packets; or
when the first data packet reaches the first communication apparatus before the second data packet and the value of the third information is a fourth value, the first indication information indicates that the first data packet and a plurality of data packets from the second data packet to a third data packet are incorrectly received data packets, wherein
the third data packet is a last data packet in the N data packets that reaches the first communication apparatus.

33. The apparatus according to claim 32, wherein
the first indication information further indicates that a data packet other than the incorrectly received data packets in the N data packets is a correctly received data packet.

34. The apparatus according to any one of claims 29 to 33, wherein that the first indication information indicates a receiving status of at least one of the N data packets in the first communication apparatus through a sending sequence of the first data packet and the second data packet and a value of the third information comprises:
when the first data packet reaches the first communication apparatus after the second data packet and the value of the third information is the first value, the first indication information indicates that a plurality of data packets from the second data packet to the first data packet are incorrectly received data packets, and the data packet other than the incorrectly received data packets in the N data packets is a correctly received data packet; or
when the first data packet reaches the first communication apparatus after the second data packet and the value of the third information is the second value, the first indication information indicates that the first data packet, the second data packet, and the third data packet are incorrectly received data packets, and a data packet between the second data packet and the first data packet and a data packet between the first data packet and the third data packet are correctly received data packets; or
when the first data packet reaches the first communication apparatus after the second data packet and the value of the third information is the third value, the first indication information indicates that the third data packet and a plurality of data packets from the second data packet to the first data packet are incorrect data packets, and a data packet between the first data packet and the third data packet is a correct data packet; or
when the first data packet reaches the first communication apparatus after the second data packet and the value of the third information is the fourth value, the first indication information indicates that the second data packet and a plurality of data packets from the first data packet to the third data packet are incorrectly received data packets, and a data packet between the second data packet and the first data packet is a correctly received data packet, wherein
the third data packet is the last data packet in the N data packets that reaches the first communication apparatus.

35. The apparatus according to claim 30, wherein that the first indication information indicates the receiving status of the at least one of the N data packets through the value of the third information comprises:
when the value of the third information is a first value, the first indication information indicates that all the N data packets are correctly received data packets; or
when the value of the third information is a second value, the first indication information indicates that the first data packet is an incorrectly received data packet.

36. The apparatus according to claim 35, wherein
when the value of the third information is the second value, the first indication information further indicates that a data packet other than the first data packet in the N data packets is a correctly received data packet.

37. The apparatus according to any one of claims 29 to 36, wherein the first indication information further carries fourth information, the fourth information indicates the third data packet, and the third data packet is the last data packet in the N data packets that reaches the first communication apparatus.

38. The apparatus according to any one of claims 29 to 37, wherein
when all the N data packets are correctly received data packets, the processing module is further configured to release cached resources occupied by the N data packets; or
when all the N data packets are incorrectly received data packets, the communication module is further configured to send the N data packets to the first communication apparatus; or
when the N data packets comprise an incorrectly received data packet and a correctly received data packet, the communication module is further configured to send the incorrectly received data packet to the first communication apparatus and the processing module is further configured to release a cached resource occupied by the correctly received data packet.

39. A communication apparatus, comprising a processor, wherein the processor is coupled to a memory, the memory is configured to store a program or instructions, and when the program or the instructions are executed by the processor, the apparatus is enabled to perform the method according to any one of claims 1 to 9 or the method according to any one of claims 10 to 19.

40. A communication system, comprising the apparatus according to any one of claims 20 to 28, and/or the apparatus according to any one of claims 29 to 38.

41. A computer-readable storage medium, wherein the storage medium stores a computer program or instructions, and when the computer program or the instructions are executed by a communication apparatus, the method according to any one of claims 1 to 19 is implemented.
